(19) Europäisches Patentamt / European Patent Office / Office européen des brevets

(11) **EP 3 483 751 B1**

(12) **EUROPEAN PATENT SPECIFICATION**

(45) Date of publication and mention
of the grant of the patent:
**21.09.2022 Bulletin 2022/38**

(21) Application number: **17824014.9**

(22) Date of filing: **22.06.2017**

(51) International Patent Classification (IPC):
**G10L 25/54** (2013.01)   **G06Q 30/02** (2012.01)
**G06F 16/00** (2019.01)

(52) Cooperative Patent Classification (CPC):
**G10L 25/48; G06F 3/165; G06Q 30/0251**

(86) International application number:
**PCT/JP2017/022985**

(87) International publication number:
**WO 2018/008407 (11.01.2018 Gazette 2018/02)**

(54) **INFORMATION PROCESSING DEVICE AND METHOD**

INFORMATIONSVERARBEITUNGSVORRICHTUNG UND -VERFAHREN

DISPOSITIF ET PROCÉDÉ DE TRAITEMENT D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **06.07.2016   JP 2016133964**

(43) Date of publication of application:
**15.05.2019 Bulletin 2019/20**

(73) Proprietor: **Sony Group Corporation**
**Tokyo 108-0075 (JP)**

(72) Inventor: **TSUBOI Naoto**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(56) References cited:
EP-A1- 2 821 950        JP-A- 2002 232 935
JP-A- 2005 250 010      JP-A- 2006 331 251
JP-A- 2012 235 379      JP-A- 2015 018 453
JP-A- 2015 023 534      JP-A- 2016 061 996
US-A1- 2007 078 709     US-A1- 2012 265 616

## Description

TECHNICAL FIELD

The present technology relates to an information processing apparatus and method, and more particularly, to an information processing apparatus and method that enable recommendation of more appropriate content in providing content.

BACKGROUND ART

Conventionally, there is a system that provides voice information, such as an advertisement and guidance, according to the position of a terminal device operated by a user. For example, there is a system that sets positions of sound sources, and enables a user to listen to voice information from the position of each sound source depending on the position of the user (see, for example, Patent Document 1 and Patent Document 2).

US 2012/265616 A1 discloses a computing device receiving target sensory content associated with a first portion of a target advertising zone and identification information associated with an object associated with a second portion of the target advertising zone. The target sensory content and the identification information is analyzed to determine a value of a feature of the target advertising zone and determine a subset of advertising content from a set of advertising content in response to the value of the feature meeting a condition of a function.

CITATION LIST

PATENT DOCUMENT

Patent Document 1: Japanese Patent Application Laid-Open No. 2013-5021
Patent Document 2: Japanese Patent Application Laid-Open No. 2008-151766

SUMMARY OF THE INVENTION

PROBLEMS TO BE SOLVED BY THE INVENTION

However, in a case of such a conventional system, when a plurality of sound sources exists in the vicinity of a user, a plurality of pieces of voice information thereof is provided to a terminal device, so that it is possible to listen to the pieces of voice information coming from their respective sound sources. Then, in a case where the positions of the plurality of sound sources are close to each other, there has been a possibility that output voices may conflict with each other, resulting in the voices being difficult for the user to hear (difficult for the user to distinguish between both voices).

The present technology has been proposed in view of such a situation. An object of the present technology is to recommend more appropriate content in providing content.

SOLUTIONS TO PROBLEMS

According to a first aspect, the invention provides an information processing apparatus in accordance with claim 1. According to a second aspect, the invention provides a method in accordance with claim 10. Further aspects are set forth in the dependent claims.

An information processing apparatus according to one aspect of the present technology includes a first score calculation unit that calculates a first score that is an evaluation value obtained by evaluation of appropriateness of recommendation for each candidate for content to be recommended; a second score calculation unit that calculates a second score that is an evaluation value obtained by evaluation of appropriateness of recommendation for each combination of the candidates; and a selection unit that selects a plurality of pieces of content to be recommended, on the basis of the first score of each candidate calculated by the first score calculation unit and the second score of each combination of the candidates calculated by the second score calculation unit.

The content can include voice data.

The second score calculation unit can calculate, as the second score, degree of overlap of sounds between the voice data in the combination.

The second score calculation unit can obtain the degree of overlap of sounds on the basis of localization of the voice data of each candidate.

The first score calculation unit can calculate appropriateness for a content acquisition side as the first score.

The first score calculation unit can obtain the appropriateness of recommendation of the content for the content acquisition side on the basis of behavior of a user that acquires the content.

There can be further included a history management unit that manages a history of the behavior of the user. The first score calculation unit can be configured to obtain the appropriateness of recommendation of the content for the content acquisition side on the basis of the history of the behavior of the user, managed by the history management unit.

The first score calculation unit can obtain the appropriateness of recommendation of the content for the content acquisition side on the basis of preference of a user that acquires the content.

The first score calculation unit can calculate appropriateness for a content providing side as the first score.

The first score calculation unit can obtain the appropriateness of recommendation of the content for the content providing side on the basis of priority set by the content providing side.

The first score calculation unit can obtain the appropriateness of recommendation of the content for the content providing side on the basis of a range in which the content can be provided, set by the content providing side.

There can be further included a correction unit that corrects the second score of each combination of the candidates, calculated by the second score calculation unit. The selection unit can be configured to select a plurality of pieces of content to be recommended, on the basis of the first score calculated by the first score calculation unit and the second score corrected by the correction unit.

There can be further included a recommended content list generation unit that generates a recommended content list that is a list of the plurality of pieces of content selected by the selection unit.

There can be further included a recommended content list providing unit that provides the recommended content list generated by the recommended content list generation unit to another information processing apparatus.

There can be further included a content acquisition unit that acquires, from another information processing apparatus, content included in the recommended content list generated by the recommended content list generation unit.

There can be further included an output unit that outputs the content acquired by the content acquisition unit.

There can be further included an acceptance unit that accepts an operation input by a user. The second score calculation unit can be configured to calculate the second score on the basis of the operation input accepted by the acceptance unit.

An information processing method according to one aspect of the present technology includes calculating a first score that is an evaluation value obtained by evaluation of appropriateness of recommendation for each candidate for content to be recommended; calculating a second score that is an evaluation value obtained by evaluation of appropriateness of recommendation for each combination of the candidates; and selecting a plurality of pieces of content to be recommended, on the basis of the calculated first score of each candidate and the calculated second score of each combination of the candidates.

An information processing apparatus according to another aspect of the present technology includes a score calculation unit that calculates a score by evaluating both of appropriateness of recommendation for a content providing side and appropriateness of recommendation for a content acquisition side for each candidate for content to be recommended; and a selection unit that selects content to be recommended, on the basis of the score of each candidate calculated by the score calculation unit.

An information processing method according to another aspect of the present technology includes calculating a score by evaluating both of appropriateness of recommendation for a content providing side and appropriateness of recommendation for a content acquisition side for each candidate for content to be recommended; and selecting content to be recommended, on the basis of the calculated score of each candidate.

In the one aspect of the present technology, a first score that is an evaluation value obtained by evaluation of appropriateness of recommendation for each candidate for content to be recommended is calculated, a second score that is an evaluation value obtained by evaluation of appropriateness of recommendation for each combination of the candidates is calculated, and a plurality of pieces of content to be recommended is selected on the basis of the calculated first score of each candidate and the calculated second score of each combination of the candidates.

In the another aspect of the present technology, a score is calculated by evaluation of both of appropriateness of recommendation for the content providing side and appropriateness of recommendation for the content acquisition side for each candidate for content to be recommended, and content to be recommended is selected on the basis of the calculated score of each candidate.

EFFECTS OF THE INVENTION

According to the present technology, information can be processed. Furthermore, according to the present technology, it is possible to recommend more appropriate content in providing content.

BRIEF DESCRIPTION OF DRAWINGS

Fig. 1 is a diagram showing a main configuration example of a voice data providing system.
Fig. 2 is a diagram describing an example of how voice data are provided.
Fig. 3 is a block diagram showing a main configuration example of a terminal device.
Fig. 4 is a block diagram showing a main configuration example of a server.
Fig. 5 is a functional block diagram showing a main configuration example of functions that the terminal device and the server have.
Fig. 6 is a functional block diagram showing a main configuration example of a recommended content list generation unit.
Fig. 7 is a diagram showing an example of a state of sound volume distribution.
Fig. 8 is a diagram showing examples of ranges in which voice data are provided.
Fig. 9 is a diagram showing examples of correction of ranges in which voice data are provided.
Fig. 10 is a flowchart describing an example of a flow of a content recommendation process.

Fig. 11 is a flowchart describing an example of a flow of a recommended content list generation process.

Fig. 12 is a diagram describing an example of how score correction is made.

Fig. 13 is a functional block diagram showing a main configuration example of a recommended content list generation unit.

Fig. 14 is a diagram describing examples of how voices are output.

Fig. 15 is a block diagram showing a main configuration example of a server.

Fig. 16 is a functional block diagram showing a main configuration example of a first filtering processing unit.

Fig. 17 is a flowchart describing an example of a flow of a content recommendation process.

Fig. 18 is a functional block diagram showing a main configuration example of functions that a terminal device and the server have.

Fig. 19 is a flowchart describing an example of a flow of a content recommendation process.

MODE FOR CARRYING OUT THE INVENTION

Modes (hereinafter referred to as embodiments) for carrying out the present disclosure will be described below. Note that description will be provided in the following order.

1. First Embodiment (Voice Data Providing System)
2. Second Embodiment (Score Correction)
3. Third Embodiment (Voice Output Form)
4. Fourth Embodiment (Behavior Recognition)
5. Fifth Embodiment (Operation Input)
6. Sixth Embodiment (Others)

<1. First Embodiment>

<Providing Voice Data>

Conventionally, on the street or the like, a lot of voice information can be obtained from the surroundings. Generally, voice information distributed uniformly in a surrounding public space is not directed to a specific person. Some people are caused to listen to information in which they are not interested, and some people cannot hear voice of information in which they have a strong interest. Furthermore, voice information has an effect of, for example, inducing a listener's interest from information on a position to be a distribution source.

Therefore, for example, it has been conceivable that there may be achieved distribution of appropriate voice information from an appropriate position according to individuals, as in the techniques described in Patent Document 1 and Patent Document 2. However, in a case of such techniques, voice information to be provided is selected according to the position, direction, and the like of a user who is a receiver of the voice information, while the intention of a provider of the voice information is not reflected. Accordingly, there has been a possibility that voice information that the provider would originally like to provide may not be provided to the user.

Furthermore, in a case of providing such voice information, it is also a conceivable case that a plurality of pieces of voice information is provided in parallel to the user. In that case, if the respective pieces of voice information are provided such that they can be heard from directions based on positional relationships between the user and their sound sources, there has been a possibility that a plurality of pieces of voice information may be provided from substantially similar directions, and the pieces of voice information may overlap each other, resulting in the voices being difficult for the user to hear (resulting in difficulty in distinguishing among the respective voices).

Therefore, content to be provided (recommended) is selected in a manner to avoid such conflict between pieces of voice information, and to reflect not only the intention of an acquisition side of the voice information but also the intention of a providing side thereof. As a result of the above, it is possible to recommend more appropriate content in providing content.

<Voice Data Providing System>

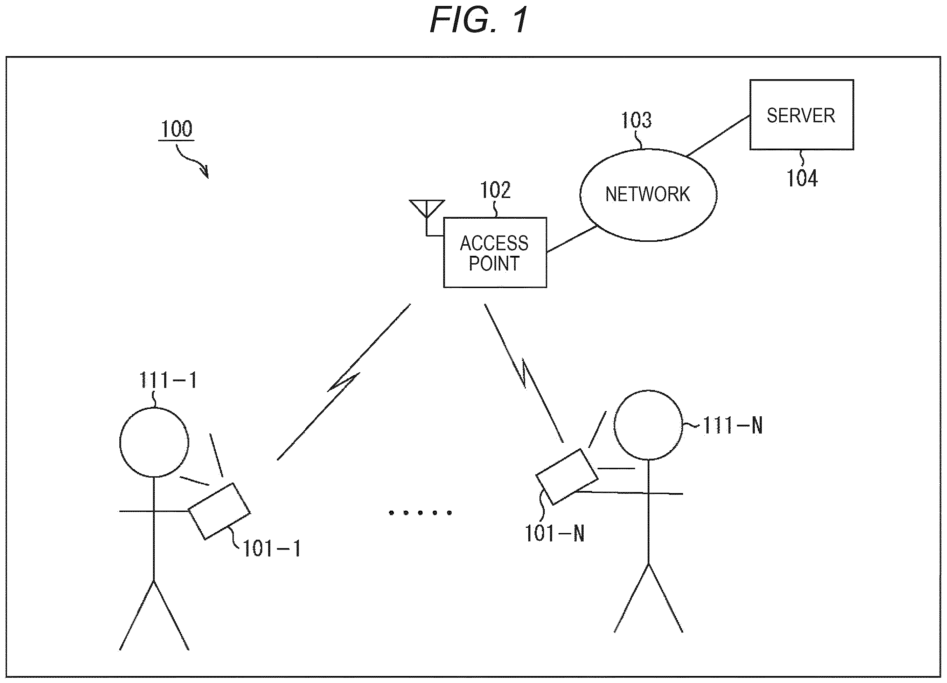

Fig. 1 is a diagram showing a main configuration example of a voice data providing system as an embodiment of an information processing system to which the present technology has been applied. A voice data providing system 100 shown in Fig. 1 is a system for providing voice information to a terminal device 101 (a user 111 having the terminal device 101).

As shown in Fig. 1, the voice data providing system 100 includes terminal devices 101-1 to 101-N (N is any given natural number). In a case where the terminal devices 101-1 to 101-N are not distinguished from each other, they are collectively referred to as the terminal device 101. Assume that the terminal devices 101-1 to 101-N are carried by users 111 that are different from each other (users 111-1 to 111-N), respectively.

The terminal device 101 has, for example, a voice output function such as a speaker, and can output voices toward the user 111 carrying the terminal device 101. The terminal device 101 also has a wireless communication function, and can perform wireless communication with other devices. For example, the terminal device 101 can connect to a network 103 via an access point 102, and can communicate with a server 104 via the network 103. For example, the terminal device 101 provides the server 104 with information regarding itself or its user 111 (for example, logs of operation details, movement, and the like) through the communication. Furthermore, for example, the terminal device 101 acquires, from the server 104, a recommended content list which is a list of pieces of content recommended by the server 104, through the communication. Moreover, for example, the terminal device 101 requests and acquires content from the server 104 on the basis of the recommended content list provided from the server 104, through the communication. In addition, for example, the terminal device 101 can output, to the user 111, voice data of the content acquired from the server 104 in this manner.

The access point 102 performs wireless communication with the terminal device 101, and also communicates with the server 104 via the network 103. Thus, the access point 102 relays communication between the terminal device 101 and the server 104. Although only the one access point 102 is shown in Fig. 1, the voice data providing system 100 can include any given number of access points 102. Wireless communication between the access point 102 and each terminal device 101 is based on an arbitrary communication standard.

The network 103 is an arbitrary communication network, and may be a communication network for wire communication, a communication network for wireless communication, or a communication network that includes both of them. Furthermore, the network 103 may include a single communication network or a plurality of communication networks. For example, the network 103 may include a communication network and a communication path of any communication standards. Examples of such a communication network and a communication path include the Internet, a public telephone network, a wide area communication network for a wireless mobile body, such as a so-called 3G network and a 4G network, a wide area network (WAN), a local area network (LAN), a wireless communication network for communication in conformity with the Bluetooth (registered trademark) standard, a communication path for short-range wireless communication such as Near Field Communication (NFC), a communication path for infrared communication, and a communication network for wire communication in conformity with standards such as the high-definition multimedia interface (HDMI) (registered trademark) and the universal serial bus (USB).

The server 104 performs processes related to providing content including voice data to each terminal device 101 (its user 111). For example, the server 104 can select pieces of content to be provided to the terminal device 101, and generate a recommended content list which is a list of the selected pieces of content. Furthermore, for example, the server 104 communicates with each terminal device 101. Through the communication, the server 104 acquires, from the terminal device 101, the information regarding the terminal device 101 or its user 111 (for example, logs of operation details, movement, and the like). In addition, the server 104 provides the recommended content list to the terminal device 101 through the communication. Moreover, through the communication, the server 104 can accept a request for content from the terminal device 101, and provide the requested content to the terminal device 101.

Note that the terminal device 101 may have a wire communication function, and be connected to the network 103. Furthermore, the server 104 may have a wireless communication function, and be configured to perform wireless communication with the terminal device 101.

<Voice Data>

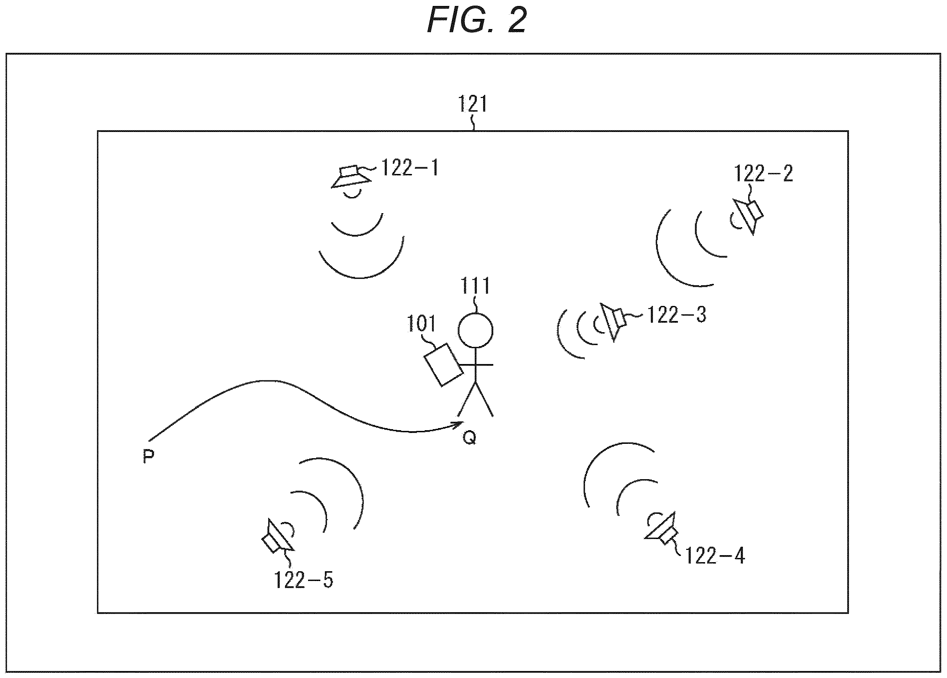

The contents of the voice data provided from the server 104 to the terminal device 101 as described above may be anything as long as it relates to the terminal device 101 (user 111). For example, as shown in Fig. 2, it may be information determined by the position and locus of the terminal device 101 (user 111) and the localization (position and direction of a sound source) of the voice data. For example, assume that in a space 121, sound sources 122-1 to 122-5 are set in positions and directions as shown in Fig. 2, and the terminal device 101 (user 111) moves from a position P to a position Q as indicated by an arrow. The contents of the voice data may correspond to the position Q, the locus and the like from the position P to the position Q, and positional relationships among the respective sound sources 122 (sound sources 122-1 to 122-5).

For example, it may be a direction guidance (navigation), such as "Please proceed to the right for OO" , to be provided according to the position of the user 111. In addition, it may be an opening (guide), such as "This OO was established in OO" , to be provided to the user 111 located in front of an exhibited object. Furthermore, it may be an introduction of sales promotion information such as "Half price for OO now!" to be provided to the user 111 that has entered a store. Moreover, it may be a caution, such as "Please stand back behind the white line", to be provided to a user in an inappropriate place. Additionally, it may be an emergency message, such as "Please evacuate to a safe place", to be provided to a user located in a dangerous place when a disaster or the like occurs.

<Terminal Device>

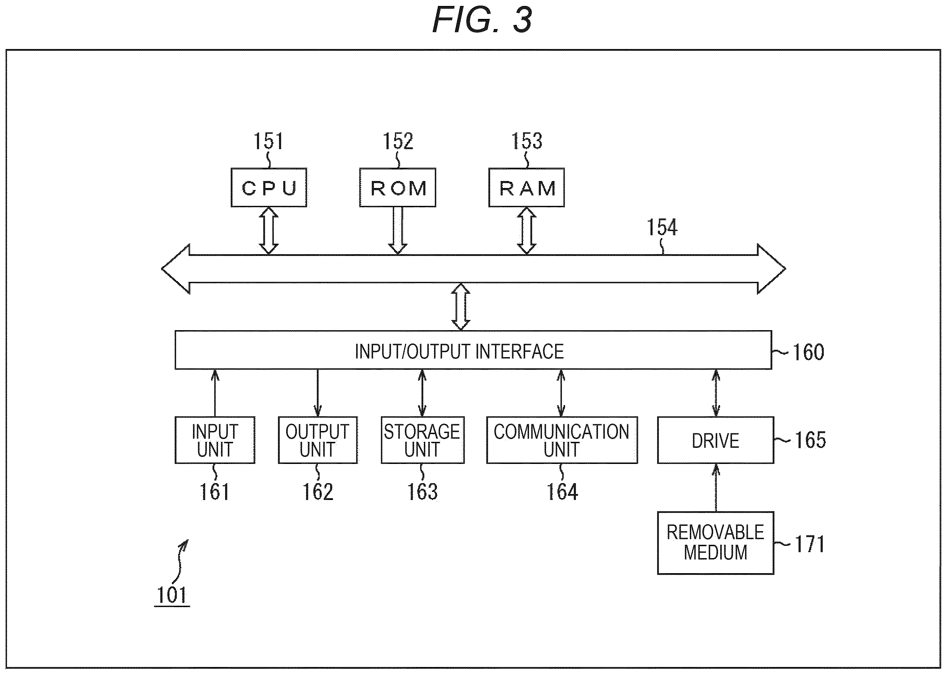

Fig. 3 is a block diagram showing a main configuration example of the terminal device 101. As shown in Fig. 3, the terminal device 101 includes a central processing unit (CPU) 151, a read only memory (ROM) 152, and a random access memory (RAM) 153, which are connected to each other via a bus 154.

An input/output interface 160 is also connected to the bus 154. There are connected to the input/output interface 160, an input unit 161, an output unit 162, a storage unit 163, a communication unit 164, and a drive 165.

The input unit 161 includes an arbitrary input device such as a keyboard, a mouse, a touch panel, an image sensor, a microphone, a switch, and an input terminal. Furthermore, the input unit 161 includes an arbitrary sensor such as an acceleration sensor. The output unit 162 includes an arbitrary output device such as a display, a speaker, and an output terminal. The storage unit 163 includes an arbitrary storage medium such as a non-volatile memory. Examples of such non-volatile memories include a hard disk, a RAM disk, a solid state drive (SSD), a USB flash drive, and the like. The communication unit 164 includes, for example, a wire communication interface, a wireless communication interface, or both interfaces of an arbitrary communication standard such as Ethernet (registered trademark), Bluetooth (registered trademark), USB, HDMI (registered trademark), and IrDA. The drive 165 drives a removable medium 171 that includes an arbitrary storage medium, such as a magnetic disk, an optical disk, a magneto-optical disk, and a semiconductor memory, mounted on the drive 165.

In the terminal device 101 configured as described above, functions to be described later can be implemented by the CPU 151, for example, loading a program stored in the storage unit 163 into the RAM 153 via the input/output interface 160 and the bus 154, and executing the program. The RAM 153 also stores data and the like necessary for the CPU 151 to perform various processes as appropriate.

It is possible to apply the program to be executed by the CPU 151, by recording the program in, for example, the removable medium 171 as a package medium or the like. In that case, it is possible to install the program on the storage unit 163 via the input/output interface 160 by mounting the removable medium 171 on the drive 165. Furthermore, this program can also be provided via a wired or wireless transmission medium such as a local area network, the Internet, and digital satellite broadcasting. In that case, the program can be received by the communication unit 164, and installed on the storage unit 163. Besides, this program can be installed on the ROM 152 or the storage unit 163 in advance.

<Server>

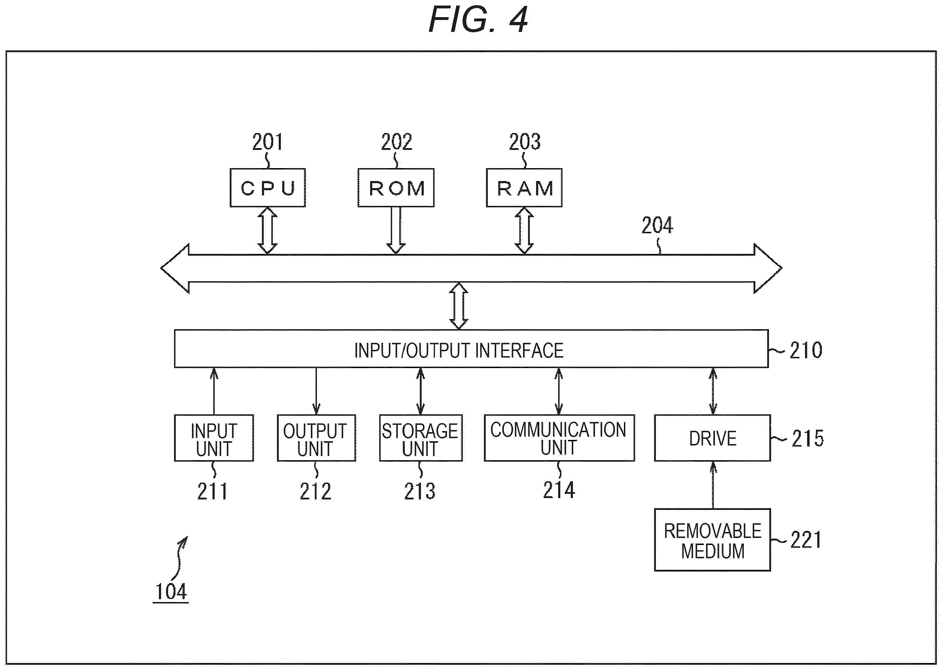

Fig. 4 is a block diagram showing a main configuration example of the server 104. As shown in Fig. 4, the server 104 includes a CPU 201, a ROM 202, and a RAM 203, which are connected to each other via a bus 204.

An input/output interface 210 is also connected to the bus 204. There are connected to the input/output interface 210, an input unit 211, an output unit 212, a storage unit 213, a communication unit 214, and a drive 215.

The input unit 211 includes an arbitrary input device such as a keyboard, a mouse, a touch panel, an image sensor, a microphone, a switch, and an input terminal. The output unit 212 includes an arbitrary output device such as a display, a speaker, and an output terminal. The storage unit 213 includes an arbitrary storage medium such as a non-volatile memory. Examples of such non-volatile memories include a hard disk, a RAM disk, an SSD, a USB flash drive, and the like. The communication unit 214 includes, for example, a wire communication interface, a wireless communication interface, or both interfaces of an arbitrary communication standard such as Ethernet (registered trademark), Bluetooth (registered trademark), USB, HDMI (registered trademark), and IrDA. The drive 215 drives a removable medium 221 that includes an arbitrary storage medium, such as a magnetic disk, an optical disk, a magneto-optical disk, and a semiconductor memory, mounted on the drive 215.

In the server 104 configured as described above, functions to be described later can be implemented by the CPU 201, for example, loading a program stored in the storage unit 213 into the RAM 203 via the input/output interface 210 and the bus 204, and executing the program. The RAM 203 also stores data and the like necessary for the CPU 201 to perform various processes as appropriate.

It is possible to apply the program to be executed by the CPU 201, by recording the program in, for example, the removable medium 221 as a package medium or the like. In that case, it is possible to install the program on the storage unit 213 via the input/output interface 210 by mounting the removable medium 221 on the drive 215. Furthermore, this program can also be provided via a wired or wireless transmission medium such as a local area network, the Internet, and digital satellite broadcasting. In that case, the program can be received by the communication unit 214, and installed on the storage unit 213. Besides, this program can be installed on the ROM 202 or the storage unit 213 in advance.

<Functional Block>

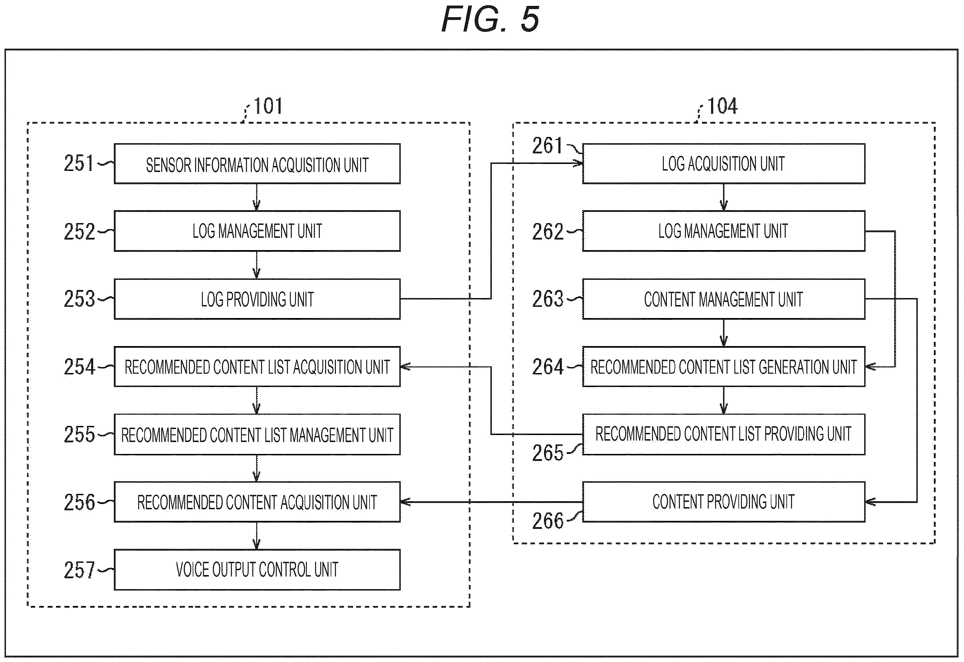

Next, described below are functions to be implemented by the terminal device 101 and the server 104 as described above executing a program. Fig. 5 is a functional block diagram showing an example of main functions to be implemented by the terminal device 101 and the server 104. As shown in Fig. 5, the terminal device 101 includes, as functional blocks, a sensor information acquisition unit 251, a log management unit 252, a log providing unit 253, a recommended content list acquisition unit 254, a recommended content list management unit 255, a recommended content acquisition unit 256, and a voice output control unit 257. In addition, the server 104 includes, as functional blocks, a log acquisition unit 261, a log management unit 262, a content management unit 263, a recommended content list generation unit 264, a recommended content list providing unit 265, and a content providing unit 266.

The sensor information acquisition unit 251 performs a process related to acquisition of sensor information. For example, the sensor information acquisition unit 251 acquires sensor information from various sensors included in the input unit 161, and provides the sensor information to the log management unit 252. The log management unit 252 performs a process related to log management. For example, the log management unit 252 generates and manages a history (log) of the position and the like of the terminal device 101 (user 111) on the basis of the sensor information provided from the sensor information acquisition unit 251. For example, the log management unit 252 is provided with the log, by the log providing unit 253. The log providing unit 253 performs a process related to providing the log. For example, the log providing unit 253 communicates with the server 104 via the communication unit 164, and provides the log of the terminal device 101 to the server 104.

The recommended content list acquisition unit 254 performs a process related to acquisition of a recommended content list that is a list of pieces of content recommended by the server 104. For example, the recommended content list acquisition unit 254 communicates with the server 104 via the communication unit 164, acquires a recommended content list provided from the server 104, and provides the recommended content list to the recommended content list management unit 255. The recommended content list management unit 255 performs a process related to management of the recommended content list. The recommended content list management unit 255 causes, for example, the storage unit 163 to store a recommended content list, and manages the recommended content list.

The recommended content acquisition unit 256 performs a process related to acquisition of data of recommended content that is content included in the recommended content list. For example, the recommended content acquisition unit 256 acquires the recommended content list managed by the recommended content list management unit 255, and communicates with the server 104 via the communication unit 164. Then, the recommended content acquisition unit 256 requests and acquires recommended content included therein from the server 104. The voice output control unit 257 performs a process related to output of voice data. For example, the voice output control unit 257 causes the speaker included in the output unit 162 to output, as a voice, voice data of the recommended content acquired by the recommended content acquisition unit 256.

The log acquisition unit 261 of the server 104 performs a process related to acquisition of the log of the terminal device 101. For example, the log acquisition unit 261 communicates with the terminal device 101 via the communication unit 214, acquires the log provided from the terminal device 101, and provides the log to the log management unit 262. The log management unit 262 performs a process related to management of the log of the terminal device 101. For example, the log management unit 262 creates a database for log management (log DB) in the storage unit 213, and registers and manages the log of the terminal device 101, acquired by the log acquisition unit 261, in the log DB.

The content management unit 263 performs a process related to management of content. For example, the content management unit 263 stores and manages a plurality of pieces of content (voice data) in the storage unit 213. These pieces of content are candidates for content to be recommended to the terminal device 101. In addition, the content management unit 263 also manages information regarding content recommendation specified by a provider of each content in association with the content. The information regarding content recommendation may have any contents, and may include one or more of, for example, priority in recommendation of content specified by its provider, an advertisement rate, characteristics (type) of a desirable user to whom content is to be provided, a specified time zone, a specified day of the week, and the like.

The recommended content list generation unit 264 performs a process related to generation of a recommended content list. For example, the recommended content list generation unit 264 acquires, from the log management unit 262, the log of the terminal device 101 to which content is to be provided. Furthermore, for example, the recommended content list generation unit 264 acquires, from the content management unit 263, information such as information regarding content and the information regarding content recommendation specified by a provider in association with the content. On the basis of these pieces of information, the recommended content list generation unit 264 selects content to be recommended to the terminal device 101 from a content group managed by the content management unit 263, and generates a recommended content list.

The recommended content list providing unit 265 performs a process related to providing the recommended content list. For example, the recommended content list providing unit 265 communicates with the terminal device 101 via the communication unit 214, and provides the recommended content list generated by the recommended content list generation unit 264 to the terminal device 101. The content providing unit 266 performs a process related to providing content. For example, the content providing unit 266 communicates with the terminal device 101 via the communication unit 214, accepts a request from the terminal device 101, acquires content corresponding to the request from the content management unit 263, and provides the content to the terminal device 101.

<Recommended Content List Generation Unit>

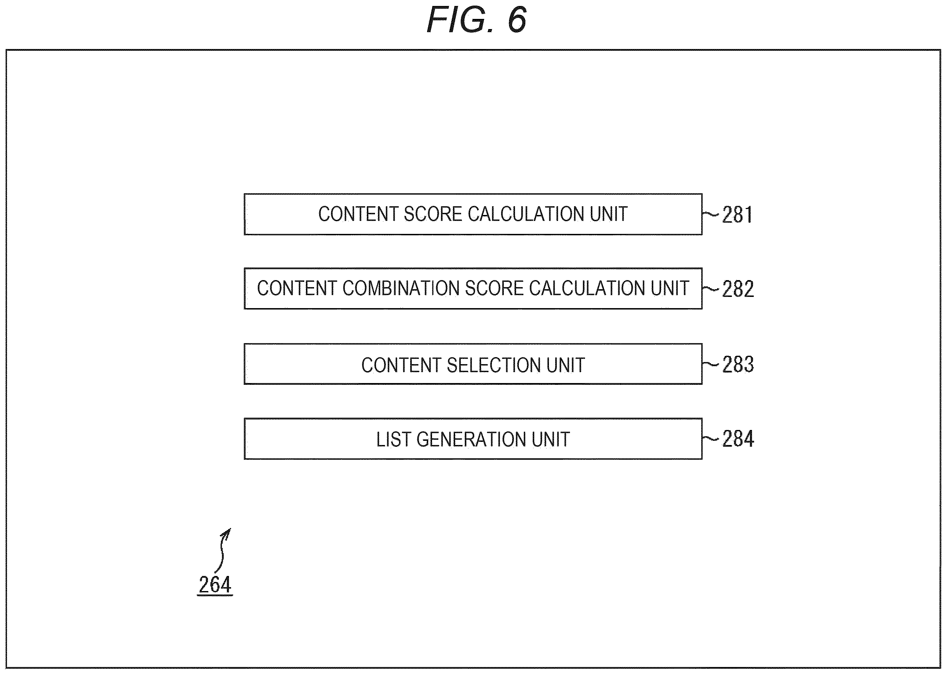

Fig. 6 is a functional block diagram showing a main configuration example of the recommended content list generation unit 264. As shown in Fig. 6, the recommended content list generation unit 264 includes a content score calculation unit 281, a content combination score calculation unit 282, a content selection unit 283, and a list generation unit 284.

The content score calculation unit 281 performs a process related to calculation of a content score which is an evaluation value obtained by evaluation of the appropriateness of recommendation for each content managed by the content management unit 263 (that is, each candidate for content to be recommended). The content score is an evaluation value for each content. The evaluation value may be calculated by any method. For example, the content score calculation unit 281 may calculate the content score by evaluating the appropriateness for a content acquisition side (that is, (the user 111 of) the terminal device 101).

Furthermore, the "appropriateness for the content acquisition side" may refer to any parameter, and may be calculated on the basis of, for example, the behavior of the user 111 (terminal device 101) that acquires the content. Then, the "behavior of the user 111 (terminal device 101)" may be obtained on the basis of, for example, a history of the behavior of the user 111 (terminal device 101) managed by the log management unit 262. Besides, for example, the "appropriateness for the content acquisition side" may be calculated on the basis of the preference of the user 111 (terminal device 101) that acquires the content. Then, the "preference of the user 111" may also be obtained on the basis of, for example, the history of the behavior of the user 111 (terminal device 101) managed by the log management unit 262.

Furthermore, for example, the content score calculation unit 281 may calculate the content score by evaluating the appropriateness for a content providing side (that is, the server 104, its administrator, content provider, or the like). The "appropriateness for the content providing side" may refer to any parameter, and may be calculated on the basis of, for example, priority set by the content providing side. For example, in a case where recommendation priority is set in advance for content, the content score calculation unit 281 can reflect the priority in selection of content to be recommended. For example, the content score calculation unit 281 can select, as recommended content, content set with high priority more preferentially than content set with low priority.

Besides, for example, the "appropriateness for the content providing side" may be calculated on the basis of a range, in which content can be provided, set by the content providing side. For example, in a case where a position of a sound source is localized in a space and a range in which content can be provided is set on the basis of the position of the sound source, only content available in a range that includes the position of the user 111 (terminal device 101) can be provided to the user 111 (terminal device 101). That is, such content can be selected as recommended content.

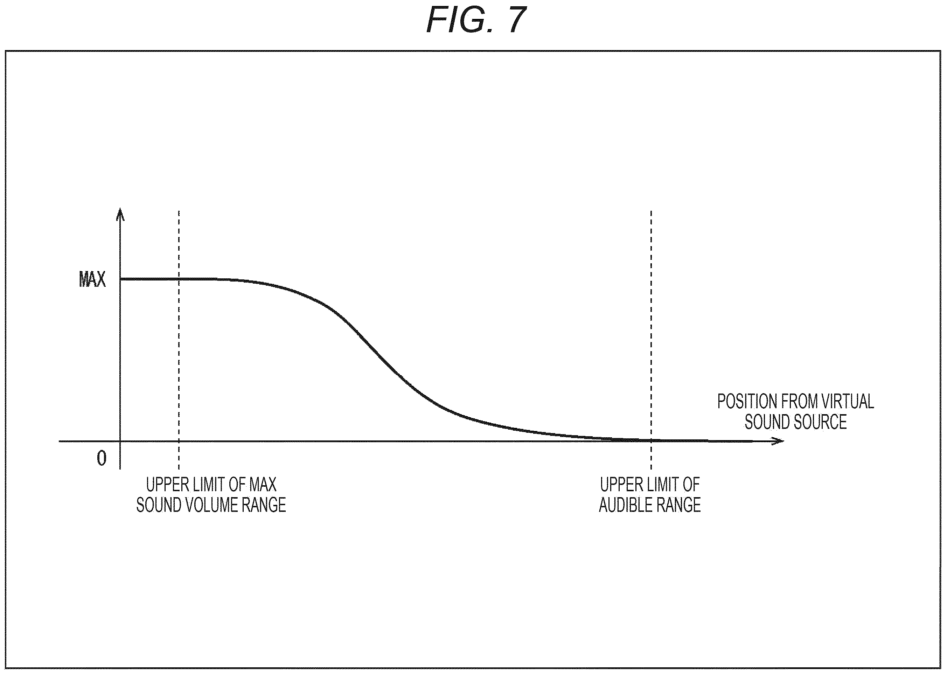

Note that it is also possible to adopt a configuration that enables sound volume, at the time of providing content (voice data) in the range in which the content can be provided (that is, in a case of providing the content), to be set such that, for example, the sound volume changes according to the position as in a graph shown in Fig. 7. In the graph of Fig. 7, the vertical axis represents sound volume, and the horizontal axis represents the distance from the position of a sound source. In the example shown in Fig. 7, sound volume is all equal (maximum) within a predetermined distance from the position of the sound source, and the sound volume decreases as the distance from the position of the sound source increases. As a result of the above, the distance to the sound source can be represented by the sound volume.

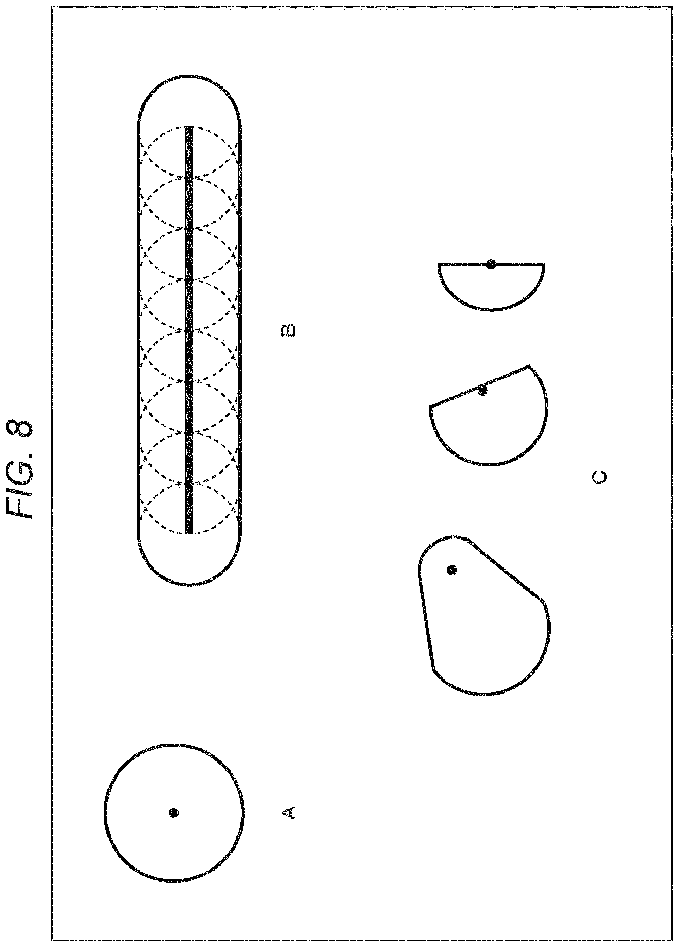

Note that the range in which content can be provided may have any shape. For example, as in an example shown in A of Fig. 8, the range in which content can be provided may be a circle with a sound source (black dot) positioned at its center (that is, it may be determined whether or not it is within the range, in which content can be provided, only on the basis of the distance from the sound source). Furthermore, as shown in B of Fig. 8, the position (black dot) of the sound source may be moved (variable). Moreover, as in each example shown in C of Fig. 8, the range in which content can be provided may have a shape other than a circle with a sound source (black dot) positioned at its center.

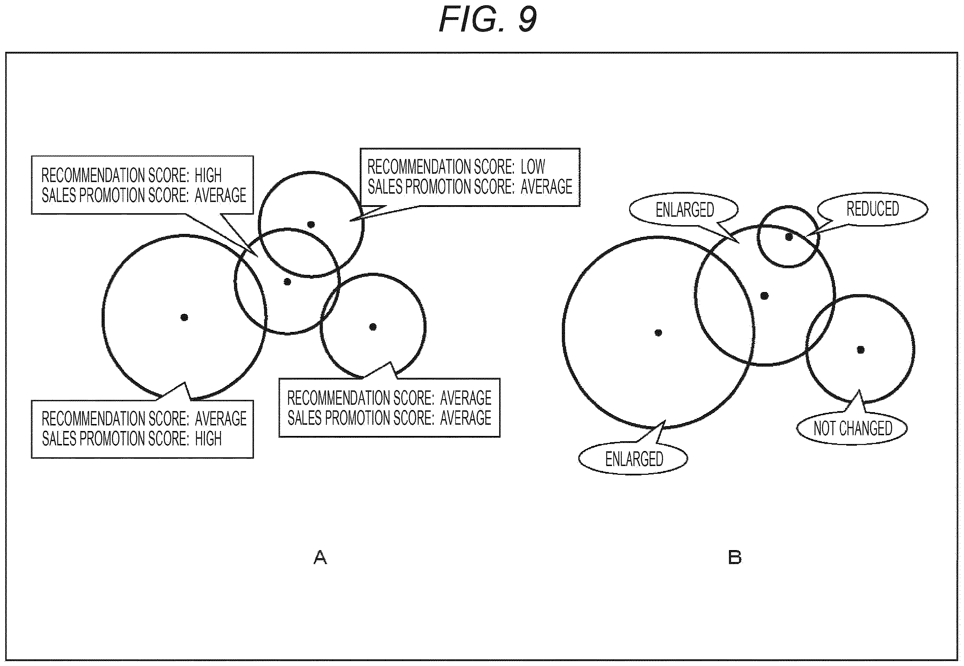

Note that the shape of the range in which content can be provided may be variable. For example, as shown in A of Fig. 9, in a case where scores such as a recommendation score and a sales promotion score are set in advance for each content, the range in which content can be provided may be deformed, enlarged, or reduced on the basis of the scores, as shown in B of Fig. 9.

As described above, it is possible to provide the terminal device 101 (user 111) with content desired by the content providing side, by evaluating the "appropriateness for the content providing side" to calculate a content score. That is, in providing content, it is possible to recommend more appropriate content.

Note that the content score calculation unit 281 may calculate the content score by evaluating both the "appropriateness for the content acquisition side" and the "appropriateness for the content providing side", or by evaluating either one of them. Both the appropriateness for the content acquisition side" and the "appropriateness for the content providing side" are evaluated to calculate the content score, so that it is possible to provide the terminal device 101 (user 111) with content desired by the content providing side. That is, in providing content, it is possible to recommend more appropriate content.

Returning to Fig. 6, the content combination score calculation unit 282 performs a process related to calculation of a content combination score. The content combination score is an evaluation value for each combination of a plurality of pieces of content (voice data), and is a parameter representing ease of listening (or difficulty in listening) in a case where voices of the plurality of pieces of content are output in parallel.

For example, there is a possibility that a plurality of voices coming from the same direction as each other may be difficult to hear due to overlap of sounds. In contrast, voices coming from directions opposite to each other involve no overlap of sounds, so that it is easy to distinguish between both voices and hear them. In a case where a sound source is localized as described above and the terminal device 101 outputs voice data such that a voice comes from the direction of the sound source, a direction from which a voice comes is determined by a positional relationship between the terminal device 101 (user 111) and the sound source of each voice data. As a result, there is a possibility that the degree of overlap of sounds may change depending on combinations of voice data.

Therefore, the content combination score calculation unit 282 obtains and evaluates the degree of overlap of sounds between voice data for each combination of such voice data, and calculates a content combination score.

For example, assume that a list L as a list of N (N is a natural number) pieces of content $c[i]$, which is managed by the content management unit 263, is defined by expression (1) as follows.

$$\text{List } L = [c[1], \ldots , c[N]] \ldots (1)$$

For such candidates, the content combination score calculation unit 282 calculates the content combination score $overlap(c[i], c[j])$. For example, in a case where the content $c[i]$ and the content $c[j]$ are simultaneously localized to be heard, the content combination score calculation unit 282 decreases the value of $overlap(c[i], c[j])$ as ease of listening increases. That is, the value of $overlap(c[i], c[j])$ increases as the overlap of voices increases in a case of simultaneously localizing the content $c[i]$ and the content $c[j]$, and becomes "0" in a case where there is no overlap.

As a matter of course, the content combination score may be calculated by any method. Furthermore, the degree of overlap of sounds may be obtained by any method, and may be obtained on the basis of information other than directions from which voices come (positional relationships with respect to sound sources). For example, it may be determined on the basis of other information such as a frequency band, tone quality, and sound volume. In addition, a plurality of pieces of information may be used in combination.

The content selection unit 283 performs a process related to selection of content to be treated as recommended content. For example, the content selection unit 283 selects recommended content by using a content score calculated by the content score calculation unit 281 and a content combination score calculated by the content combination score calculation unit 282.

The recommended content may be selected by using the content score and the content combination score in any manner. For example, the recommended content may be selected as follows.

$$M = \Phi, \quad i = 1$$

for i in 1, ... , N

$Overlap(m, c[i])$ is obtained for any given element m of M, and if the value is equal to or smaller than a threshold value a, $c[i]$ is added to M.

M obtained in this manner forms a list involving no overlap of voices exceeding a certain level (threshold value a), in which the scores are also taken into consideration to some extent.

As described above, even in a case of outputting a plurality of pieces of voice data in parallel, it is possible to prevent an increase in overlap of sounds and a decrease in ease of listening by using the content combination score for selection of recommended content. In other words, the server 104 can recommend more appropriate content in providing content.

The list generation unit 284 generates a list (list) of pieces of content selected by the content selection unit 283. While the contents of the list may be anything, the list may include, for example, the name of content, identification information, and the like.

<Flow of Content Recommendation Process>

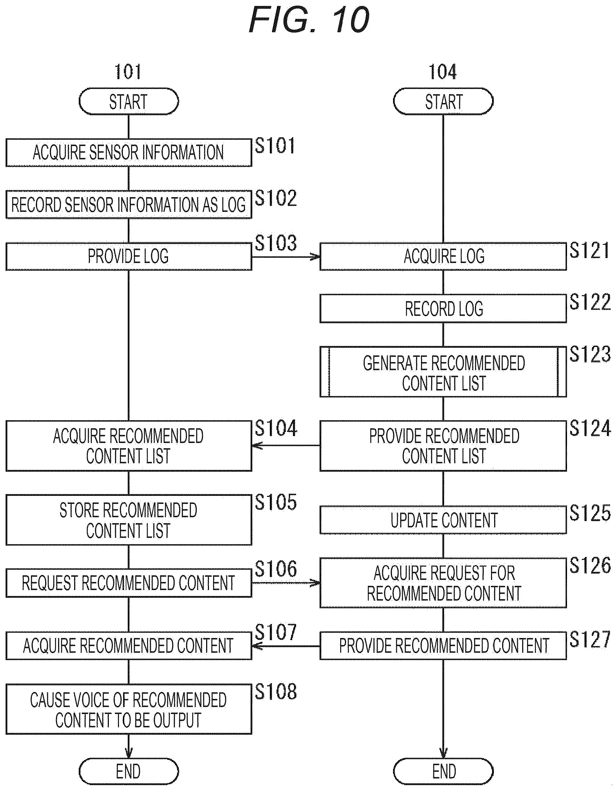

Next, described below is a process to be performed in the voice data providing system 100 as described above. The terminal device 101 and the server 104 perform a content recommendation process in the voice data providing system 100 while communicating with each other. An example of a flow of the content recommendation process will be described with reference to a flowchart of Fig. 10.

Upon a content recommendation process being started, the sensor information acquisition unit 251 of the terminal device 101 acquires sensor information in step S101. In step S102, the log management unit 252 records and manages the sensor information as a log. In step S103, the log providing unit 253 provides the log to the server 104.

In step S121, the log acquisition unit 261 of the server 104 acquires the log. In step S122, the log management unit 262 records the acquired log. In step S123, the recommended content list generation unit 264 performs a recommended content list generation process on the basis of the log and information regarding content and the like, and generates a recommended content list. Details of this process will be described later.

In step S124, the recommended content list providing unit 265 provides the recommended content list to the terminal device 101. In step S104, the recommended content list acquisition unit 254 acquires the recommended content list. In step S105, the recommended content list management unit 255 stores the recommended content list.

Furthermore, in step S125, the content management unit 263 of the server 104 updates content in a case where the content has been updated.

In step S106, the recommended content acquisition unit 256 of the terminal device 101 requests recommended content. Meanwhile, the content providing unit 266 of the server 104 acquires the request in step S126. Then, in step S127, the content providing unit 266 provides the recommended content having been requested to the terminal device 101 as a requester. Meanwhile, the recommended content acquisition unit 256 of the terminal device 101 acquires the recommended content in step S107. Then, in step S108, the voice output control unit 257 causes the speaker of the output unit 162 to output a voice of the recommended content having been acquired.

Upon completion of the process of step S108, the content recommendation process is terminated.

<Flow of Recommended Content List Generation Process>

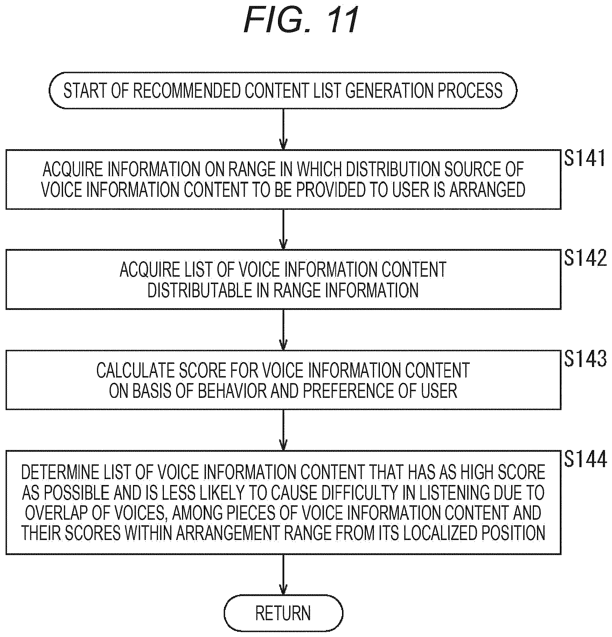

Next, described below with reference to a flowchart of Fig. 11 is an example of a flow of the recommended content list generation process to be performed in step S123 of Fig. 10.

Upon the recommended content list generation process being started, the content score calculation unit 281 acquires, in step S141, information of a range in which a distribution source of voice information content to be provided to the user 111 (terminal device 101) is arranged.

In step S142, the content score calculation unit 281 acquires a list of voice information content distributable in the range information.

In step S143, the content score calculation unit 281 calculates a content score for content of voice information on the basis of the behavior and preference of the user.

In step S144, the content combination score calculation unit 282 evaluates sound overlap and the like, and obtains a content combination score. In addition, the content selection unit 283 determines a list of voice information content that has as high a score as possible and is less likely to cause difficulty in listening due to overlap of voices, among pieces of voice information content and their scores within the arrangement range from its localized position, on the basis of the content score calculated by the content score calculation unit 281 and the content combination score. The list generation unit 284 generates a recommended content list on the basis of this official information.

Upon completion of the process of step S144, the recommended content list generation process is terminated, and the process returns to Fig. 10.

It is possible to evaluate the "appropriateness for the content providing side" to calculate the content score, by performing each process as described above. In addition, even in a case of outputting a plurality of pieces of voice data in parallel, it is possible to prevent an increase in overlap of sounds and a decrease in ease of listening. In other words, the server 104 can recommend more appropriate content in providing content.

Note that the content score and the content combination score may be calculated at any timing. For example, these scores may be calculated and stored in advance. Furthermore, in that case, the scores may be managed in association with the content.

<2. Second Embodiment>

<Score Correction>

Note that in the first embodiment, it has been described that a content combination score is used to select recommended content. Meanwhile, the content combination score may be corrected.

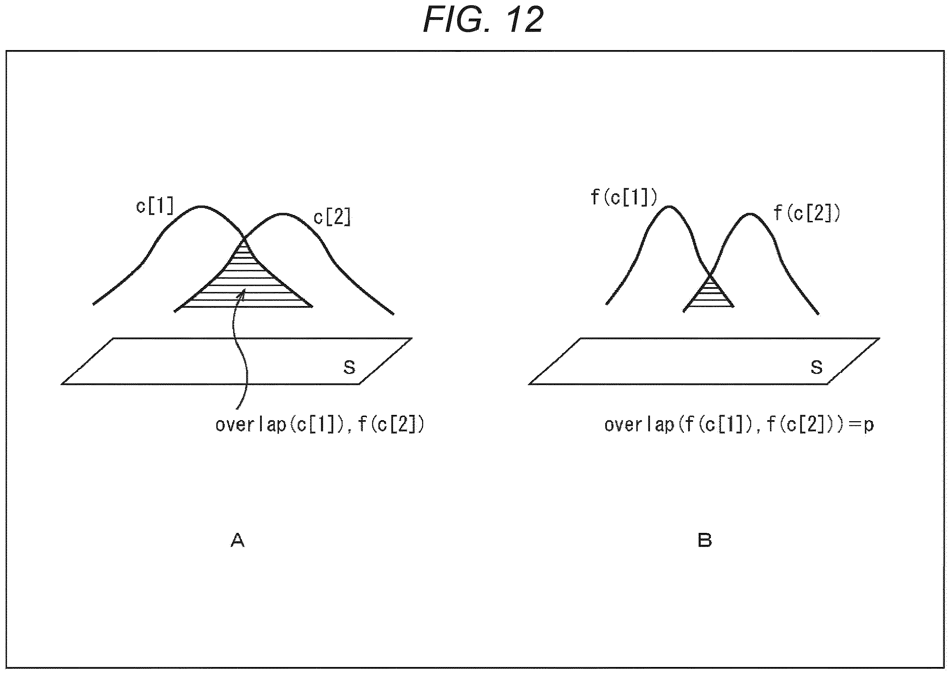

For example, in a case where there is a plurality of pieces of voice information content having high scores, the plurality of pieces of voice information content may be distributed after sound volume distribution is converted so as to eliminate difficulty in listening thereto to some extent. For example, assume that in an area S, voice information content $c[1]$ and voice information content $c[2]$ show sound volume distribution as shown in A of Fig. 12. In this case, an area indicated by a horizontal line pattern shows a part where sounds overlap, and a content combination score overlap ($c[1]$, $c[2]$) represents the size of this part.

In such a case, the sound volume distribution of the voice information content $c[1]$ and the sound volume distribution of the voice information content $c[2]$ may be corrected by a conversion $f$, as shown in B of Fig. 12, such that the content combination score overlap ($c[1]$, $c[2]$) has a predetermined value $p$.

As a result of the above, in a case of, for example, expressing the sound volume distribution as normal distribution, it can be calculated in advance as a parameter for controlling variance so that the overlap for a combination of $c[i]$ and $c[j]$ has the value $p$.

<Recommended Content List Generation Unit>

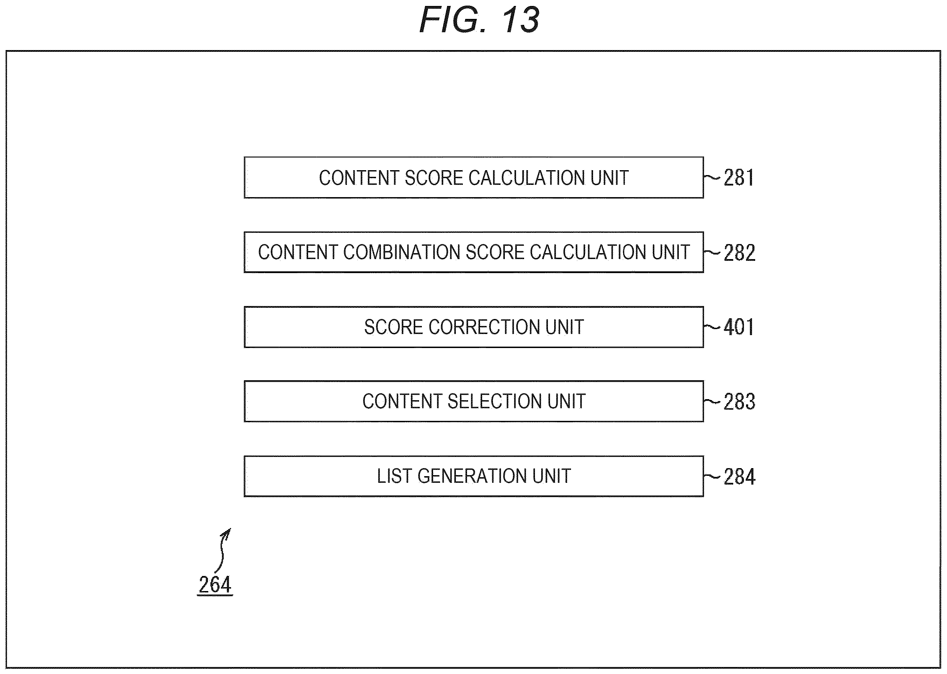

A main configuration example of a recommended content list generation unit 264 in this case is shown in Fig. 13. As shown in Fig. 13, the recommended content list generation unit 264 in this case includes a score correction unit 401 in addition to the configuration shown in Fig. 6. The score correction unit 401 corrects the content combination score as described above.

In this case, a recommended content list generation process is performed in a manner similar to that in the first embodiment (Fig. 11). For example, the score correction unit 401 corrects the content combination score calculated, in step S144, by a content combination score calculation unit 282.

As a result of the above, it is possible to decrease the content combination score. Thus, even in a case of outputting a plurality of pieces of voice data in parallel, it is possible to prevent an increase in overlap of sounds and a decrease in ease of listening. In other words, the server 104 can recommend more appropriate content in providing content.

## <3. Third Embodiment>

### <Voice Output Form>

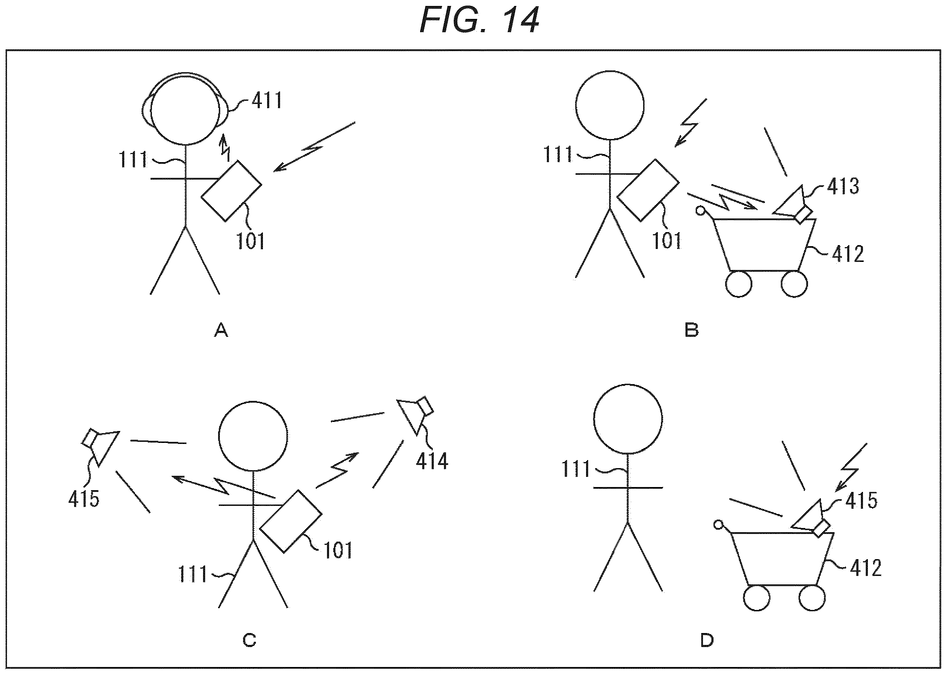

In the first embodiment, it has been described that the terminal device 101 includes a speaker from which a voice of content (voice data) provided from the server 104 is output. However, the present technology is not limited to this example. For example, as shown in A of Fig. 14, a terminal device 101 may transmit recommended content (voice data) to another device. In a case of the example shown in Fig. 14, the terminal device 101 performs wireless communication with headphones 411, provides recommended content (voice data) to the headphones 411, and causes the recommended content (voice data) to be output from the headphones 411. As a result of the above, it is possible to cause only a user 111 to output a voice directed only to the user 111. Note that communication between the headphones 411 and the terminal device 101 may be wire communication.

Furthermore, as shown in B of Fig. 14, the terminal device 101 may transmit recommended content (voice data) to, for example, an information processing apparatus 413 provided in a cart 412 that can be rented at a store and the like, and may cause the recommended content (voice data) to be output from a speaker of the information processing apparatus 413. Note that in this case, communication between the terminal device 101 and the information processing apparatus 413 of the cart 412 may be wireless communication or wire communication.

Moreover, as shown in C of Fig. 14, the terminal device 101 may transmit recommended content (voice data) to, for example, speaker devices 414 and 415 installed in the vicinity of the user 111 in a store or the like, and may cause the recommended content (voice data) to be output from the speaker devices 414 and 415. In this case, communication between the terminal device 101 and the speaker devices 414 and 415 may be wireless communication or wire communication.

In addition, for example, an information processing apparatus 416 provided in the cart 412 that can be rented at a store and the like may be used instead of the terminal device 101, as shown in D of Fig. 14. That is, in this case, a server 104 and the information processing apparatus 416 perform wireless communication without using the terminal device 101, and perform a content recommendation process, a recommended content list generation process, and the like, as in the case of the terminal device 101 and the server 104 of the first embodiment. Then, the server 104 recommends content, and a voice of the recommended content is output from the information processing apparatus 416.

## <4. Fourth Embodiment>

### <Behavior Recognition>

Note that generation of a recommended content list (selection of recommended content) may be performed in a server 104. Alternatively, generation thereof may be performed in a terminal device 101, or in both of the terminal device 101 and the server 104. For example, recommended content may be selected as follows. A first filtering process is performed in the server 104 so as to narrow down candidates for recommended content. Then, a second filtering process is performed in the terminal device 101, and recommended content is selected therefrom.

Furthermore, the terminal device 101 may recognize the behavior of a user 111 on the basis of sensor information, and use the recognition result of the behavior for the second filtering process.

### <Functional Block>

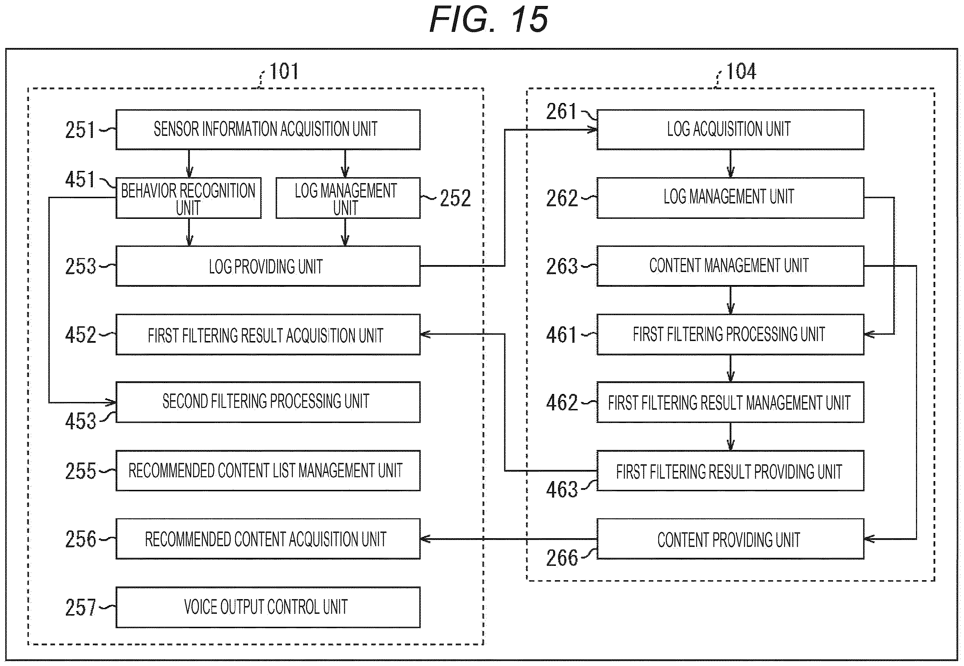

Fig. 15 shows an example of main functional blocks implemented by the terminal device 101 and the server 104 in that case.

As shown in Fig. 15, the terminal device 101 of this case includes a behavior recognition unit 451 in addition to the configuration according to the first embodiment (Fig. 5). Moreover, the terminal device 101 of this case includes a first filtering result acquisition unit 452 and a second filtering processing unit 453, in place of the recommended content list acquisition unit 254 in the configuration according to the first embodiment (Fig. 5).

The behavior recognition unit 451 recognizes the behavior of the user 111 on the basis of sensor information acquired from a sensor information acquisition unit 251, and provides the recognition result to a log providing unit 253 and the second filtering processing unit 453.

The first filtering result acquisition unit 452 performs a process related to acquisition of a result of a first filtering process performed in the server 104. For example, the first filtering result acquisition unit 452 communicates with the server 104 via a communication unit 164, and acquires the result of the first filtering process.

The second filtering processing unit 453 performs a second filtering process for selecting recommended content by using the result of the first filtering process acquired by the first filtering result acquisition unit 452. That is, the second filtering process is a process of selecting recommended content from among candidates having passed through the first filtering process. Details of the second filtering process are arbitrary. For example, it is possible to set a predetermined condition, and select, as recommended content, a candidate that does not meet the condition.

The server 104 includes a first filtering processing unit 461, a first filtering result management unit 462, and a first filtering result providing unit 463, in place of the recommended content list generation unit 264 and the recommended content list providing unit 265 in the configuration according to the first embodiment (Fig. 5).

The first filtering processing unit 461 performs a process related to the first filtering process for narrowing down candidates for recommended content. Details of the second filtering process are arbitrary. For example, it is possible to set a predetermined condition, and exclude, from candidates, all pieces of content that meet the condition such that only pieces of content that do not meet the condition are selected as candidates for the second filtering process.

The first filtering result management unit 462 performs a process related to management of a result of the first filtering process performed in the first filtering processing unit 461. For example, the first filtering result management unit 462 manages the result of the first filtering process provided from the first filtering processing unit 461, by causing a storage unit 213 to store the result thereof. The first filtering result providing unit 463 performs a process related to providing the result of the first filtering process. For example, the first filtering result providing unit 463 communicates with the terminal device 101 via a communication unit 214, and provides the first filtering result to the terminal device 101.

<First Filtering Processing Unit>

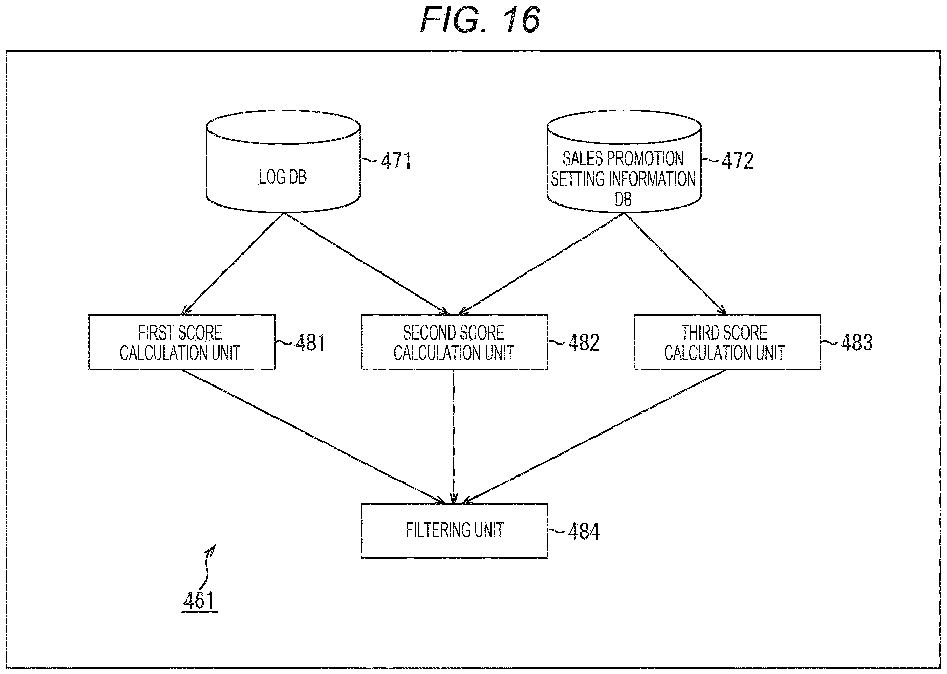

Fig. 16 is a diagram showing a configuration example of main functional blocks included in the first filtering processing unit 461. As shown in Fig. 16, a log DB 471 and a sales promotion setting information DB 472 are created in the storage unit 213. Furthermore, the first filtering processing unit 461 includes a first score calculation unit 481, a second score calculation unit 482, a third score calculation unit 483, and a filtering unit 484.

The log DB 471 is a database created and managed by a log management unit 262. A log of the terminal device 101 provided from the terminal device 101 is registered in the log DB 471. That is, the log DB 471 stores information on a content acquisition side.

The sales promotion setting information DB 472 is a database created and managed by a content management unit 263. Information regarding the providing of content, which is set by a provider or the like of the content (voice data), is registered in the sales promotion setting information DB 472. The information may be any information. Examples of the information include priority in recommendation, an attribute of a user to whom recommendation is to be made, a specified date and time of recommendation, and the like. Alternatively, the information may be information other than the above.

The first score calculation unit 481 calculates a content score on the basis of the information in the log DB 471. That is, the first score calculation unit 481 calculates a content score by using the information on the content acquisition side. The first score calculation unit 481 provides the calculated score to the filtering unit 484.

Furthermore, the third score calculation unit 483 calculates a content score on the basis of the information in the sales promotion setting information DB 472. That is, the third score calculation unit 483 calculates a content score by using the information on a content providing side. The third score calculation unit 483 provides the calculated score to the filtering unit 484.

The second score calculation unit 482 calculates a content score on the basis of the information in the log DB 471 and the information in the sales promotion setting information DB 472. That is, the second score calculation unit 482 calculates a content score by using both the information on the content acquisition side and the information on the content providing side. The second score calculation unit 482 provides the calculated score to the filtering unit 484.

The filtering unit 484 narrows down candidates (performs a filtering process) by using these scores. In doing so, the filtering unit 484 may combine the respective content scores provided from the first through third score calculation units 481 through 483 by multiplying the scores by weight coefficients, and narrow down candidates by using the result of the combining of the scores. Each of the weight coefficients, by which the respective content scores are to be multiplied, can be arbitrarily set. In other words, the filtering unit 484 can perform a filtering process by reflecting the information on the content providing side and the information on the content acquisition side at any given ratio. Therefore, it is possible to narrow down candidates under more flexible conditions.

<Flow of Content Recommendation Process>

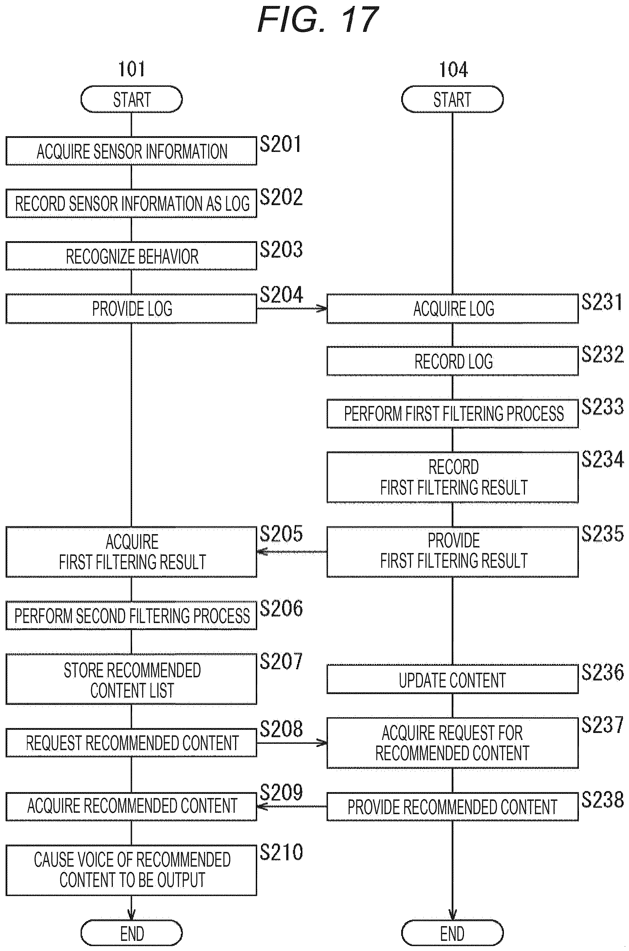

An example of a flow of a content recommendation process in this case will be described with reference to a flowchart of Fig. 17.

Upon the content recommendation process being started, the sensor information acquisition unit 251 of the terminal device 101 acquires sensor information in step S201. In step S202, a log management unit 252 records and manages the sensor information as a log. In step S203, the behavior recognition unit 451 recognizes the behavior of the user 111 on the basis of the sensor information. In step S204, the log providing unit 253 provides the log to the server 104.

In step S231, a log acquisition unit 261 of the server 104 acquires the log. In step S232, the log management unit 262 records the acquired log. In step S233, the first filtering processing unit 461 performs the first filtering process on the basis of the log and information regarding content and the like, and narrows down candidates. In step S234, the first filtering result management unit 462 records and manages a result of the first filtering process.

In step S235, the first filtering result providing unit 463 provides the result of the first filtering process to the terminal device 101. In step S205, the first filtering result acquisition unit 452 acquires the result of the first filtering process. In step S206, the second filtering processing unit 453 performs the second filtering process on the candidates (content) narrowed down in the first filtering process, selects recommended content, and generates a recommended content list. In step S207, a recommended content list management unit 255 stores and manages the recommended content list having been generated.

Furthermore, in step S236, the content management unit 263 of the server 104 updates content in a case where the content has been updated.

In step S208, a recommended content acquisition unit 256 of the terminal device 101 requests the recommended content. Meanwhile, a content providing unit 266 of the server 104 acquires the request in step S237. Then, in step S238, the content providing unit 266 provides the recommended content having been requested to the terminal device 101 as a requester. Meanwhile, the recommended content acquisition unit 256 of the terminal device 101 acquires the recommended content in step S209. Then, in step S210, a voice output control unit 257 causes a speaker of an output unit 162 to output a voice of the recommended content having been acquired.

Upon completion of the process of step S210, the content recommendation process is terminated.

It is possible to evaluate the "appropriateness for the content providing side" to calculate the content score, by performing the content recommendation process as described above. In addition, even in a case of outputting a plurality of pieces of voice data in parallel, it is possible to prevent an increase in overlap of sounds and a decrease in ease of listening. In other words, the server 104 can recommend more appropriate content in providing content. Furthermore, in this case, selection of recommended content is separately performed by the server 104 and the terminal device 101 as the first filtering process and the second filtering process, respectively. It is thus possible to distribute a load.

<5. Fifth Embodiment>

<Operation Input>

Note that a condition for a second filtering process to be performed in a terminal device 101 may be set by a user.

<Functional Block>

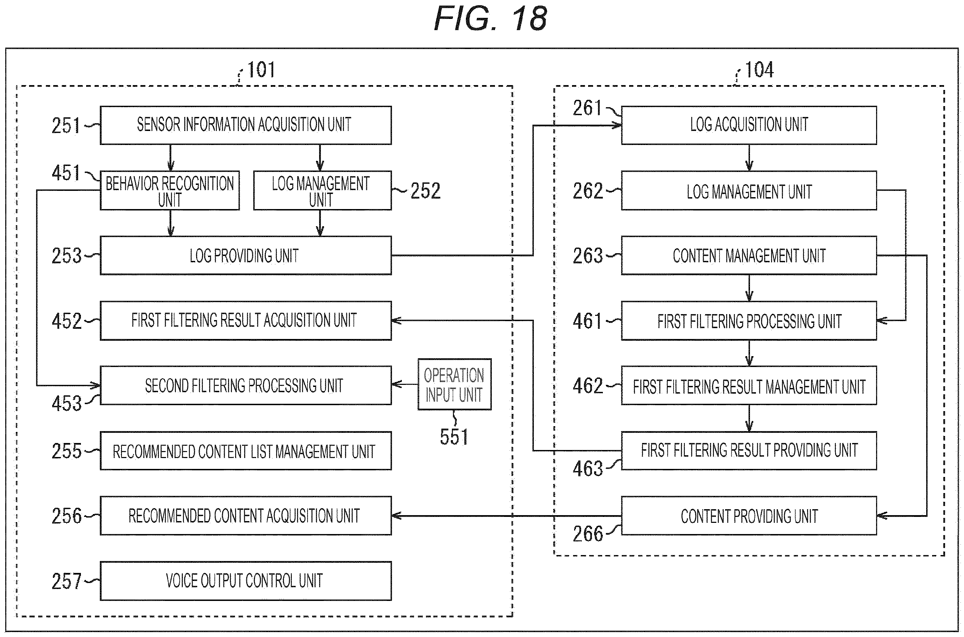

Fig. 18 shows an example of main functional blocks implemented by the terminal device 101 and a server 104 in this case.

As shown in Fig. 18, the terminal device 101 of this case includes an operation input unit 551 in addition to the configuration according to the fourth embodiment (Fig. 15). The operation input unit 551 controls an input unit 161 to accept a user operation, and thus accepts an instruction from the user. While details of the user operation are arbitrary, it may be, for example, an instruction relating to condition setting and the like of the second filtering process. The operation input unit 551 provides the accepted user instruction to a second filtering processing unit 453. The second filtering processing unit 453 sets a condition on the basis of the user instruction, and performs the second filtering process by using the condition.

<Flow of Content Recommendation Process>

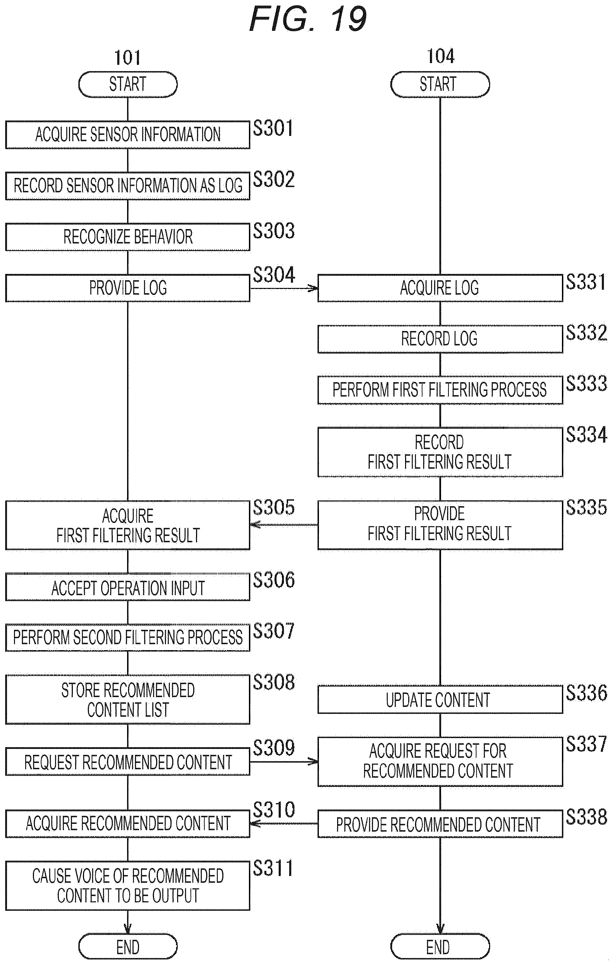

An example of a flow of a content recommendation process in this case will be described with reference to a flowchart of Fig. 19.

In this case, the processes of steps S301 to S305 and steps S331 to S335 of the content recommendation process are performed in a manner similar to that of the processes of steps S201 to S205 and steps S231 to S235 of Fig. 17, respectively.

Upon acquisition of a first filtering result in the terminal device 101, the operation input unit 551 accepts an operation input from a user 111 in step S306. In step S307, the second filtering processing unit 453 sets (or updates) a condition in accordance with the operation input, and performs the second filtering process by using the condition reflecting the operation input.

The processes of steps S308 to S311 and steps S336 to S338 are performed in a manner similar to that of the processes of steps S207 to S210 and steps S236 to S238 of Fig. 17, respectively.

Upon completion of the process of step S311, the content recommendation process is terminated.

It is possible to reflect a user operation in the second filtering process by performing the content recommendation process as described above. Thus, it is possible to recommend and provide content that is more suitable to the user's preference.

<6. Sixth Embodiment>

<Other Systems>

The present technology is not limited to the above-described electronic shelf label system. The present technology can be applied to a system to be used for any purpose in any field, such as transportation, medical care, security, agriculture, stockbreeding, mining, cosmetic purposes, factories, home appliances, weather, and surveillance of nature.

<Computer>

A series of the processes described above can be performed by hardware or can be performed by software. In a case where the series of processes is performed by software, a computer may be configured to execute the software. Examples of such computers include a computer incorporated in dedicated hardware, and a general-purpose computer capable of implementing arbitrary functions by installing various programs.

For example, in a case of a terminal device 101 shown in Fig. 3, a CPU 151 loads, for example, a program stored in a storage unit 163 into a RAM 153 via an input/output interface 160 and a bus 154, and executes the program, so that it is possible to achieve functions equivalent to part or all of the configuration of the above-described hardware in each embodiment. That is, at least a part of the series of processes described above is performed. The RAM 153 also stores data and the like necessary for the CPU 151 to perform various processes as appropriate.

It is possible to apply the program to be executed by the CPU 151, by recording the program in, for example, the removable medium 171 as a package medium or the like. In that case, it is possible to install the program on the storage unit 163 via the input/output interface 160 by mounting the removable medium 171 on the drive 165. Furthermore, this program can also be provided via a wired or wireless transmission medium such as a local area network, the Internet, and digital satellite broadcasting. In that case, the program can be received by the communication unit 164, and installed on the storage unit 163. Besides, this program can be installed on the ROM 152 or the storage unit 163 in advance.

Furthermore, in a case of, for example, a server 104 shown in Fig. 4, a CPU 201 loads, for example, a program stored in a storage unit 213 into a RAM 203 via an input/output interface 210 and a bus 204, and executes the program, so that it is possible to achieve functions equivalent to part or all of the configuration of the above-described hardware in each embodiment. That is, at least a part of the series of processes described above is performed. The RAM 203 also stores data and the like necessary for the CPU 201 to perform various processes as appropriate.

It is possible to apply the program to be executed by the CPU 201, by recording the program in, for example, the removable medium 221 as a package medium or the like. In that case, it is possible to install the program on the storage unit 213 via the input/output interface 210 by mounting the removable medium 221 on the drive 215. Furthermore, this program can also be provided via a wired or wireless transmission medium such as a local area network, the Internet, and digital satellite broadcasting. In that case, the program can be received by the communication unit 214, and installed on the storage unit 213. Besides, this program can be installed on the ROM 202 or the storage unit 213 in advance.

Note that it is also possible to cause a part of the series of processes described above to be performed by hardware, and to cause the other part thereof to be performed by software.

\<Others>

Embodiments of the present technology are not limited to the above-described embodiments, and various modifications can be made without departing from the scope of the present technology.

Furthermore, for example, the present technology can also be implemented in any configuration that constitutes an apparatus or system, such as a processor as a system large-scale integration (LSI) and the like, a module using a plurality of processors and the like, a unit using a plurality of modules and the like, and a set or the like configured by addition of another function to a unit (that is, the configuration of a part of an apparatus).

Note that in the present specification, the term system refers to a set of a plurality of constituent elements (devices, modules (parts), and the like), and it does not matter whether or not all constituent elements are in the same housing. Therefore, a plurality of devices housed in separate housings and connected via a network, and a single device having a plurality of modules housed in a single housing are both referred to as systems.

Furthermore, for example, the configuration described as a single device (or processing unit) may be divided and configured as a plurality of devices (or processing units). In contrast, the configurations described above as a plurality of devices (or processing units) may be collectively configured as a single device (or processing unit). Moreover, as a matter of course, a configuration other than that described above may be added to the configuration of each device (or each processing unit). In addition, as long as the configuration and operation of the entire system are substantially the same, a part of the configuration of a device (or processing unit) may be included in the configuration of another device (or another processing unit).

Furthermore, for example, the present technology can adopt a configuration of cloud computing in which a plurality of devices shares a single function via a network to perform processing in collaboration.

Moreover, for example, the above-described program can be executed in any device. In that case, the device may have a necessary function (functional block and the like) such that necessary information can be obtained.

Additionally, for example, each step described in the above-described flowchart can be performed by a single device, and can also be shared and performed by a plurality of devices. Furthermore, in a case where a plurality of processes is included in a single step, the plurality of processes included in the single step can be performed by a single device, and can also be shared and performed by a plurality of devices.

Note that with respect to a program to be executed by a computer, processes of steps in program description may be performed in time series in accordance with the order described in the present specification, may be performed in parallel, or may be performed separately at necessary timing, for example, when a call is made. That is, as long as there is no conflict, the processes of the respective steps may be performed in an order different from that described above. Furthermore, the processes of the steps in the program description may be performed in parallel with processes of another program, or may be performed in combination with processes of another program.

Note that, as long as there is no conflict, each of a plurality of the present techniques described in the present specification can be implemented independently as a single technique. As a matter of course, it is also possible to use and implement any techniques of the present disclosure together. For example, the present technique described in any one of the embodiments can also be implemented in combination with the present technique described in another embodiment. Moreover, any of the present techniques described above can also be implemented in combination with another technique not described above.

REFERENCE SIGNS LIST

| 100 | Voice data providing system |
|---|---|
| 101 | Terminal device |
| 102 | Access point |
| 103 | Network |
| 104 | Server |
| 151 | CPU |
| 201 | CPU |
| 251 | Sensor information acquisition unit |
| 252 | Log management unit |
| 253 | Log providing unit |
| 254 | Recommended content list acquisition unit |
| 255 | Recommended content list management unit |
| 256 | Recommended content acquisition unit |
| 257 | Voice output control unit |
| 261 | Log acquisition unit |
| 262 | Log management unit |
| 263 | Content management unit |
| 264 | Recommended content list generation unit |
| 265 | Recommended content list providing unit |
| 266 | Content providing unit |
| 281 | Content score calculation unit |
| 282 | Content combination score calculation unit |
| 283 | Content selection unit |
| 284 | List generation unit |
| 401 | Score correction unit |
| 451 | Behavior recognition unit |
| 452 | First filtering result acquisition unit |
| 453 | Second filtering processing unit |
| 461 | First filtering processing unit |
| 462 | First filtering result management unit |
| 463 | First filtering result providing unit |
| 471 | Log DB |
| 472 | Sales promotion setting information DB |
| 481 | First score calculation unit |
| 482 | Second score calculation unit |
| 483 | Third score calculation unit |
| 484 | Filtering unit |
| 551 | Operation input unit |

**Claims**

1. An information processing apparatus comprising:

   a first score calculation unit (281) that calculates a first score that is an evaluation value obtained by evaluation of appropriateness of recommendation for each candidate for content to be recommended to a content acquisition side, wherein
   the first score calculation unit (281) obtains the appropriateness of recommendation of the content for the content acquisition side on a basis of behavior of a user that acquires the content;
   a second score calculation unit (282) that calculates a second score that is an evaluation value obtained by evaluation of appropriateness of recommendation for each combination of candidates for content to be recommended, the content includes voice data, wherein the second score calculation unit (282) calculates, as the second score, degree of overlap of sounds between the voice data in the combination, wherein second score calculation unit (282) obtains the degree of overlap of sounds on a basis of localization of the voice data of each candidate for content to be recommended; and
   a selection unit (283) that selects a plurality of pieces of content to be recommended, on a basis of the first score of each candidate calculated by the first score calculation unit (281) and the second score of each combination of the candidates calculated by the second score calculation unit (282).

2. The information processing apparatus according to claim 1, further comprising:

   a history management unit (252) that manages a history of the behavior of the user, wherein the first score calculation unit (281) is configured to obtain the appropriateness of recommendation of the content for the content acquisition side on a basis of the history of the behavior of the user, managed by the history management unit (252).

3. The information processing apparatus according to claim 1, wherein the first score calculation unit (281) obtains the appropriateness of recommendation of the content for the content acquisition side on a basis of preference of a user that acquires the content.

4. The information processing apparatus according to claim 1, wherein

the first score calculation unit (281) calculates appropriateness for a content providing side as the first score, wherein
the first score calculation unit (281) obtains the appropriateness of recommendation of the content for the content providing side on a basis of priority set by the content providing side.

5. The information processing apparatus according to claim 4, wherein
the first score calculation unit (281) obtains the appropriateness of recommendation of the content for the content providing side on a basis of a range in which the content can be provided, set by the content providing side.

6. The information processing apparatus according to claim 1, further comprising:

a correction unit (401) that corrects the second score of each combination of the candidates, calculated by the second score calculation unit (282),
wherein the selection unit (283) is configured to select a plurality of pieces of content to be recommended, on a basis of the first score calculated by the first score calculation unit (281) and the second score corrected by the correction unit.

7. The information processing apparatus according to claim 1, further comprising:

a recommended content list generation unit (264) that generates a recommended content list that is a list of the plurality of pieces of content selected by the selection unit,
a recommended content list providing unit (265) that provides the recommended content list generated by the recommended content list generation unit to another information processing apparatus,
a content acquisition unit (256) that acquires, from another information processing apparatus, content included in the recommended content list generated by the recommended content list generation unit (264) .

8. The information processing apparatus according to claim 7, further comprising:
an output unit (162) that outputs the content acquired by the content acquisition unit (256).

9. The information processing apparatus according to claim 1, further comprising:

an acceptance unit that accepts an operation input by a user,
wherein the second score calculation unit (282) is configured to calculate the second score on a basis of the operation input accepted by the acceptance unit.

10. An information processing method comprising:

obtaining a appropriateness of recommendation of a content for a content acquisition side on a basis of behavior of a user that acquires the content;
calculating a first score that is an evaluation value obtained by evaluation of appropriateness of recommendation for each candidate for content to be recommended to the content acquisition side;
calculating a second score that is an evaluation value obtained by evaluation of appropriateness of recommendation for each combination of candidates for content to be recommended, the content includes voice data, wherein the second score is degree of overlap of sounds between the voice data in the combination, wherein the degree of overlap of sounds are obtained on a basis of localization of the voice data of each candidate for content to be recommended; and
selecting a plurality of pieces of content to be recommended, on a basis of the calculated first score of each candidate and the calculated second score of each combination of the candidates.

**Patentansprüche**

1. Informationsverarbeitungsvorrichtung, umfassend:

eine erste Bewertungszahlberechnungseinheit (281), die eine erste Bewertungszahl berechnet, die ein Beurteilungswert ist, der durch eine Beurteilung einer Empfehlungseignung für jeden Kandidaten für einen für eine Contentakquisenseite zu empfehlenden Content erhalten wird, wobei
die erste Bewertungszahlberechnungseinheit (281) die Empfehlungseignung des Contents für die Contentakquisenseite aufgrund eines Verhaltens eines Benutzers erhält, der den Content akquiriert;
eine zweite Bewertungszahlberechnungseinheit (282), die eine zweite Bewertungszahl berechnet, die ein Beurteilungswert ist, der durch eine Beurteilung einer Empfehlungseignung für jede Kombination von Kandidaten für einen zu empfehlenden Inhalt erhalten wird, wobei der Content Sprachdaten beinhaltet, wobei die zweite Bewertungszahlberechnungseinheit (282) einen Überlappungsgrad von Schallsignalen zwischen den Sprachdaten in der Kombination als die zweite Bewertungszahl berechnet, wobei die zweite Bewertungszahlberechnungseinheit (282) den Überlappungsgrad der Schallsignale aufgrund einer Lokalisierung der Sprachdaten von jedem Kandidaten für den zu empfehlenden Content erhält; und

eine Auswahleinheit (283), die eine Vielzahl von Bestandteilen des zu empfehlenden Contents auswählt aufgrund der ersten Bewertungszahl von jedem Kandidaten, die von der ersten Bewertungszahlberechnungseinheit (281) berechnet wird, und aufgrund der zweiten Bewertungszahl von jeder Kombination der Kandidaten, die von der zweiten Bewertungszahlberechnungseinheit (282) berechnet wird.

2. Informationsverarbeitungsvorrichtung nach Anspruch 1, die außerdem umfasst:

eine Langzeitdatenverwaltungseinheit (252), die einen Langzeitverlauf des Verhaltens des Benutzers verwaltet, wobei die erste Bewertungszahlberechnungseinheit (281) konfiguriert ist zum Erhalten der Empfehlungseignung des Contents für die Contentakquisenseite aufgrund des Langzeitverlaufs des Verhaltens des Benutzers, der durch die Langzeitdatenverwaltungseinheit (252) verwaltet wird.

3. Informationsverarbeitungsvorrichtung nach Anspruch 1, wobei die erste Bewertungszahlberechnungseinheit (281) die Empfehlungseignung des Contents für die Contentakquisenseite aufgrund von Präferenzen eines Benutzers erhält, der den Content akquiriert.

4. Informationsverarbeitungsvorrichtung nach Anspruch 1, wobei

die erste Bewertungszahlberechnungseinheit (281) die Eignung für eine Contentbereitstellungsseite als die erste Bewertungszahl berechnet, wobei die erste Bewertungszahlberechnungseinheit (281) die Empfehlungseignung des Contents für die Contentbereitstellungsseite aufgrund einer Priorität erhält, die von der Contentbereitstellungsseite eingestellt wird.

5. Informationsverarbeitungsvorrichtung nach Anspruch 4, wobei,

die erste Bewertungszahlberechnungseinheit (281) die Empfehlungseignung des Contents für die Contentbereitstellungsseite aufgrund eines Bereichs erhält, in dem der Content bereitgestellt werden kann, der von der Contentbereitstellungsseite eingestellt wird.

6. Informationsverarbeitungsvorrichtung nach Anspruch 1, die außerdem umfasst:

eine Korrektureinheit (401), welche die zweite Bewertungszahl von jeder Kombination der Kandidaten korrigiert, die von der zweiten Bewertungszahlberechnungseinheit (282) berechnet wird, wobei die Auswahleinheit (283) konfiguriert ist zum Auswählen einer Vielzahl von Bestandteilen des zu empfehlenden Contents aufgrund der ersten Bewertungszahl, die von der ersten Bewertungszahlberechnungseinheit (281) berechnet wird, und aufgrund der zweiten Bewertungszahl, die von der Korrektureinheit korrigiert wird.

7. Informationsverarbeitungsvorrichtung nach Anspruch 1, die außerdem umfasst:

eine Erzeugungseinheit für eine Liste mit empfohlenem Content (264), die eine Liste mit empfohlenem Content erzeugt, die eine Liste der Vielzahl von Bestandteilen des Contents ist, die von der Auswahleinheit ausgewählt wird, eine Bereitstellungseinheit für eine Liste mit empfohlenem Content (265), welche die Liste mit empfohlenem Content, die von der Erzeugungseinheit für eine Liste mit empfohlenem Content erzeugt wird, einer anderen Informationsverarbeitungsvorrichtung bereitstellt, eine Contentakquiseneinheit (256), die von einer anderen Informationsverarbeitungsvorrichtung einen Content akquiriert, der in der Liste mit empfohlenem Content enthalten ist, die von der Erzeugungseinheit für eine Liste mit empfohlenem Content (264) erzeugt wird.

8. Informationsverarbeitungsvorrichtung nach Anspruch 7, die außerdem umfasst:
eine Ausgabeeinheit (162), die den Content ausgibt, der von der Contentakquiseneinheit (256) akquiriert wird.

9. Informationsverarbeitungsvorrichtung nach Anspruch 1, die außerdem umfasst:

eine Akzeptanzeinheit, die eine Funktionseingabe von einem Benutzer akzeptiert, wobei die zweite Bewertungszahlberechnungseinheit (282) konfiguriert ist zum Berechnen der zweiten Bewertungszahl aufgrund der Funktionseingabe, die von der Akzeptanzeinheit akzeptiert wurde.

10. Informationsverarbeitungsverfahren, umfassend:

Erhalten einer Empfehlungseignung eines Contents für eine Contentakquisenseite aufgrund eines Verhaltens eines Benutzers, der den Content akquiriert;
Berechnen einer ersten Bewertungszahl, die ein Beurteilungswert ist, der durch eine Beurteilung einer Empfehlungseignung für jeden Kandidaten für einen für die Contentakquisenseite zu empfehlenden Content erhalten wird;
Berechnen einer zweiten Bewertungszahl, die ein Beurteilungswert ist, der durch eine Beurteilung einer Empfehlungseignung für jede Kombination von Kandidaten für einen zu empfehlenden Inhalt erhalten wird, wobei der Content Sprachdaten beinhaltet, wobei die zweite Bewertungszahl ein Überlappungsgrad von Schallsignalen zwischen den Sprachdaten in der Kombination ist, wobei der Überlappungsgrad der Schallsignale aufgrund einer Lokalisierung der Sprachdaten von jedem Kandidaten für den zu empfehlenden Content erhalten wird; und
Auswählen einer Vielzahl von Bestandteilen des zu empfehlenden Contents aufgrund der berechneten ersten Bewertungszahl von jedem Kandidaten und aufgrund der berechneten zweiten Bewertungszahl von jeder Kombination der Kandidaten.

**Revendications**

1. Appareil de traitement d'informations comprenant :

une première unité de calcul de score (281) qui calcule un premier score qui est une valeur d'évaluation obtenue par l'évaluation de l'adéquation de la recommandation pour chaque candidat pour le contenu à recommander à un côté acquisition de contenu, dans lequel la première unité de calcul de score (281) obtient l'adéquation de la recommandation du contenu pour le côté acquisition de contenu sur la base du comportement d'un utilisateur qui acquiert le contenu ;
une seconde unité de calcul de score (282) qui calcule un second score qui est une valeur d'évaluation obtenue par l'évaluation de l'adéquation de la recommandation pour chaque combinaison de candidats pour le contenu à recommander, le contenu inclut des données vocales, dans lequel la seconde unité de calcul de score (282) calcule, en tant que second score, le degré de chevauchement de sons entre les données vocales dans la combinaison, dans lequel la seconde unité de calcul de score (282) obtient le degré de chevauchement de sons sur la base de la localisation des données vocales de chaque candidat pour le contenu à recommander ; et
une unité de sélection (283) qui sélectionne une pluralité d'éléments de contenu à recommander, sur la base du premier score de chaque candidat calculé par la première unité de calcul de score (281) et du second score de chaque combinaison des candidats calculé par la seconde unité de calcul de score (282).

2. Appareil de traitement d'informations selon la revendication 1, comprenant en outre :

une unité de gestion d'historique (252) qui gère un historique du comportement de l'utilisateur, dans lequel la première unité de calcul de score (281) est configurée pour obtenir l'adéquation de la recommandation du contenu pour le côté acquisition de contenu sur la base de l'historique du comportement de l'utilisateur, géré par l'unité de gestion d'historique (252) .

3. Appareil de traitement d'informations selon la revendication 1, dans lequel
la première unité de calcul de score (281) obtient l'adéquation de la recommandation du contenu pour le côté acquisition de contenu sur la base de la préférence d'un utilisateur qui acquiert le contenu.

4. Appareil de traitement d'informations selon la revendication 1, dans lequel

la première unité de calcul de score (281) calcule l'adéquation pour un côté fourniture de contenu en tant que premier score, dans lequel la première unité de calcul de score (281) obtient l'adéquation de la recommandation du contenu pour le côté fourniture de contenu sur la base d'une priorité établie par le côté fourniture de contenu.

5. Appareil de traitement d'informations selon la revendication 4, dans lequel
la première unité de calcul de score (281) obtient l'adéquation de la recommandation du contenu pour le côté fourniture de contenu sur la base d'une plage dans laquelle le contenu peut être fourni, établie par le côté fourniture de contenu.

6. Appareil de traitement d'informations selon la revendication 1, comprenant en outre :

une unité de correction (401) qui corrige le second score de chaque combinaison des candidats, calculé par la seconde unité de calcul de score (282),

dans lequel l'unité de sélection (283) est configurée pour sélectionner une pluralité d'éléments de contenu à recommander, sur la base du premier score calculé par la première unité de calcul de score (281) et du second score corrigé par l'unité de correction.

7. Appareil de traitement d'informations selon la revendication 1, comprenant en outre :

une unité de génération de liste de contenus recommandés (264) qui génère une liste de contenus recommandés qui est une liste de la pluralité d'éléments de contenu sélectionnés par l'unité de sélection,

une unité de fourniture de liste de contenus recommandés (265) qui fournit la liste de contenus recommandés générée par l'unité de génération de liste de contenus recommandés à un autre appareil de traitement d'informations,

une unité d'acquisition de contenu (256) qui acquiert, à partir d'un autre appareil de traitement d'informations, un contenu inclus dans la liste de contenus recommandés générée par l'unité de génération de liste de contenus recommandés (264).

8. Appareil de traitement d'informations selon la revendication 7, comprenant en outre :
une unité de sortie (162) qui sort le contenu acquis par l'unité d'acquisition de contenu (256).

9. Appareil de traitement d'informations selon la revendication 1, comprenant en outre :

une unité d'acceptation qui accepte une opération entrée par un utilisateur,

dans lequel la seconde unité de calcul de score (282) est configurée pour calculer le second score sur la base de l'entrée d'opération acceptée par l'unité d'acceptation.

10. Procédé de traitement d'informations comprenant de :

obtenir une adéquation de recommandation d'un contenu pour un côté acquisition de contenu sur la base du comportement d'un utilisateur qui acquiert le contenu ;

calculer un premier score qui est une valeur d'évaluation obtenue par l'évaluation de l'adéquation de la recommandation pour chaque candidat pour le contenu à recommander au côté acquisition de contenu ;

calculer un second score qui est une valeur d'évaluation obtenue par l'évaluation de l'adéquation de la recommandation pour chaque combinaison de candidats pour un contenu à recommander, le contenu inclut des données vocales, dans lequel le second score est le degré de chevauchement de sons entre les données vocales dans la combinaison, dans lequel le degré de chevauchement de sons est obtenu sur la base de la localisation des données vocales de chaque candidat pour un contenu à recommander ; et

sélectionner une pluralité d'éléments de contenu à recommander, sur la base du premier score calculé de chaque candidat et du second score calculé de chaque combinaison des candidats.

## FIG. 1

# FIG. 2

## FIG. 3

EP 3 483 751 B1

## FIG. 4

EP 3 483 751 B1

## FIG. 5

EP 3 483 751 B1

**101**

| | |
|---|---|
| 251 | SENSOR INFORMATION ACQUISITION UNIT |
| 252 | LOG MANAGEMENT UNIT |
| 253 | LOG PROVIDING UNIT |
| 254 | RECOMMENDED CONTENT LIST ACQUISITION UNIT |
| 255 | RECOMMENDED CONTENT LIST MANAGEMENT UNIT |
| 256 | RECOMMENDED CONTENT ACQUISITION UNIT |
| 257 | VOICE OUTPUT CONTROL UNIT |

**104**

| | |
|---|---|
| 261 | LOG ACQUISITION UNIT |
| 262 | LOG MANAGEMENT UNIT |
| 263 | CONTENT MANAGEMENT UNIT |
| 264 | RECOMMENDED CONTENT LIST GENERATION UNIT |
| 265 | RECOMMENDED CONTENT LIST PROVIDING UNIT |
| 266 | CONTENT PROVIDING UNIT |

# FIG. 6

| |
|---|
| CONTENT SCORE CALCULATION UNIT ~281 |
| CONTENT COMBINATION SCORE CALCULATION UNIT ~282 |
| CONTENT SELECTION UNIT ~283 |
| LIST GENERATION UNIT ~284 |

264

EP 3 483 751 B1

FIG. 7

EP 3 483 751 B1

FIG. 8

## FIG. 9

# FIG. 10

101
START

ACQUIRE SENSOR INFORMATION | S101

RECORD SENSOR INFORMATION AS LOG | S102

PROVIDE LOG | S103

104
START

ACQUIRE LOG | S121

RECORD LOG | S122

GENERATE RECOMMENDED CONTENT LIST | S123

ACQUIRE RECOMMENDED CONTENT LIST | S104

PROVIDE RECOMMENDED CONTENT LIST | S124

STORE RECOMMENDED CONTENT LIST | S105

UPDATE CONTENT | S125

REQUEST RECOMMENDED CONTENT | S106

ACQUIRE REQUEST FOR RECOMMENDED CONTENT | S126

ACQUIRE RECOMMENDED CONTENT | S107

PROVIDE RECOMMENDED CONTENT | S127

CAUSE VOICE OF RECOMMENDED CONTENT TO BE OUTPUT | S108

END

END

# FIG. 11

START OF RECOMMENDED CONTENT LIST GENERATION PROCESS

ACQUIRE INFORMATION ON RANGE IN WHICH DISTRIBUTION SOURCE OF VOICE INFORMATION CONTENT TO BE PROVIDED TO USER IS ARRANGED — S141

ACQUIRE LIST OF VOICE INFORMATION CONTENT DISTRIBUTABLE IN RANGE INFORMATION — S142

CALCULATE SCORE FOR VOICE INFORMATION CONTENT ON BASIS OF BEHAVIOR AND PREFERENCE OF USER — S143

DETERMINE LIST OF VOICE INFORMATION CONTENT THAT HAS AS HIGH SCORE AS POSSIBLE AND IS LESS LIKELY TO CAUSE DIFFICULTY IN LISTENING DUE TO OVERLAP OF VOICES, AMONG PIECES OF VOICE INFORMATION CONTENT AND THEIR SCORES WITHIN ARRANGEMENT RANGE FROM ITS LOCALIZED POSITION — S144

RETURN

*FIG. 12*

c[1]  c[2]

overlap(c[1]),f(c[2])

S

A

f(c[1])  f(c[2])

overlap(f(c[1]),f(c[2]))=p

S

B

# FIG. 13

| CONTENT SCORE CALCULATION UNIT | ~281 |

| CONTENT COMBINATION SCORE CALCULATION UNIT | ~282 |

| SCORE CORRECTION UNIT | ~401 |

| CONTENT SELECTION UNIT | ~283 |

| LIST GENERATION UNIT | ~284 |

264

## FIG. 14

EP 3 483 751 B1

## FIG. 15

**101**

| | |
|---|---|
| 251 | SENSOR INFORMATION ACQUISITION UNIT |
| 451 | BEHAVIOR RECOGNITION UNIT |
| 252 | LOG MANAGEMENT UNIT |
| 253 | LOG PROVIDING UNIT |
| 452 | FIRST FILTERING RESULT ACQUISITION UNIT |
| 453 | SECOND FILTERING PROCESSING UNIT |
| 255 | RECOMMENDED CONTENT LIST MANAGEMENT UNIT |
| 256 | RECOMMENDED CONTENT ACQUISITION UNIT |
| 257 | VOICE OUTPUT CONTROL UNIT |

**104**

| | |
|---|---|
| 261 | LOG ACQUISITION UNIT |
| 262 | LOG MANAGEMENT UNIT |
| 263 | CONTENT MANAGEMENT UNIT |
| 461 | FIRST FILTERING PROCESSING UNIT |
| 462 | FIRST FILTERING RESULT MANAGEMENT UNIT |
| 463 | FIRST FILTERING RESULT PROVIDING UNIT |
| 266 | CONTENT PROVIDING UNIT |

FIG. 16

EP 3 483 751 B1

# FIG. 17

101

START

ACQUIRE SENSOR INFORMATION — S201

RECORD SENSOR INFORMATION AS LOG — S202

RECOGNIZE BEHAVIOR — S203

PROVIDE LOG — S204

ACQUIRE FIRST FILTERING RESULT — S205

PERFORM SECOND FILTERING PROCESS — S206

STORE RECOMMENDED CONTENT LIST — S207

REQUEST RECOMMENDED CONTENT — S208

ACQUIRE RECOMMENDED CONTENT — S209

CAUSE VOICE OF RECOMMENDED CONTENT TO BE OUTPUT — S210

END

104

START

ACQUIRE LOG — S231

RECORD LOG — S232

PERFORM FIRST FILTERING PROCESS — S233

RECORD FIRST FILTERING RESULT — S234

PROVIDE FIRST FILTERING RESULT — S235

UPDATE CONTENT — S236

ACQUIRE REQUEST FOR RECOMMENDED CONTENT — S237

PROVIDE RECOMMENDED CONTENT — S238

END

# FIG. 18

EP 3 483 751 B1

# FIG. 19

101
START

ACQUIRE SENSOR INFORMATION  S301

RECORD SENSOR INFORMATION AS LOG  S302

RECOGNIZE BEHAVIOR  S303

PROVIDE LOG  S304

ACQUIRE
FIRST FILTERING RESULT  S305

ACCEPT OPERATION INPUT  S306

PERFORM SECOND FILTERING PROCESS  S307

STORE RECOMMENDED
CONTENT LIST  S308

REQUEST RECOMMENDED CONTENT  S309

ACQUIRE RECOMMENDED CONTENT  S310

CAUSE VOICE OF RECOMMENDED
CONTENT TO BE OUTPUT  S311

END

104
START

ACQUIRE LOG  S331

RECORD LOG  S332

PERFORM FIRST FILTERING PROCESS  S333

RECORD
FIRST FILTERING RESULT  S334

PROVIDE
FIRST FILTERING RESULT  S335

UPDATE CONTENT  S336

ACQUIRE REQUEST FOR
RECOMMENDED CONTENT  S337

PROVIDE RECOMMENDED CONTENT  S338

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012265616 A1
- JP 2013005021 A
- JP 2008151766 A